(19) Europäisches Patentamt
European Patent Office
Office européen des brevets

(11) **EP 4 660 957 A1**

(12) **EUROPEAN PATENT APPLICATION**
published in accordance with Art. 153(4) EPC

(43) Date of publication:
**10.12.2025  Bulletin 2025/50**

(21) Application number: **24777513.3**

(22) Date of filing: **02.02.2024**

(51) International Patent Classification (IPC):
**G06T 15/50** (2011.01)

(52) Cooperative Patent Classification (CPC):
**G06T 15/506; G06T 15/04; G06T 15/50;
Y02D 10/00**

(86) International application number:
**PCT/CN2024/075504**

(87) International publication number:
**WO 2024/198719 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2023  CN 202310321006**

(71) Applicant: **Tencent Technology (Shenzhen)
Company Limited
Shenzhen, Guangdong 518057 (CN)**

(72) Inventors:
• **SHI, Yijie
  Shenzhen, Guangdong 518057 (CN)**
• **QIAO, Chen
  Shenzhen, Guangdong 518057 (CN)**
• **WANG, Xueqiang
  Shenzhen, Guangdong 518057 (CN)**

(74) Representative: **Gunzelmann, Rainer et al
Wuesthoff & Wuesthoff
Patentanwälte und Rechtsanwalt PartG mbB
Schweigerstraße 2
81541 München (DE)**

(54) **DATA PROCESSING METHOD AND APPARATUS, COMPUTER DEVICE,
COMPUTER-READABLE STORAGE MEDIUM, AND COMPUTER PROGRAM PRODUCT**

(57)    Disclosed in embodiments of the present application are a data processing method and apparatus, a computer device, a computer-readable storage medium, and a computer program product. The method comprises: obtaining rendering rules, the rendering rules comprising a first rendering rule and a second rendering rule; obtaining a sample body texture of a sample map generated according to the first rendering rule; on the basis of the sample body texture, separately determining an actual rendering value of the sample map under a sample environment configuration and reference depth data of the sample map; on the basis of an initial rendering parameter in the second rendering rule and the reference depth data, determining a predicted rendering value of the sample map under the sample environment configuration; training the initial rendering parameter on the basis of the predicted rendering value and the actual rendering value, and obtaining a service rendering parameter, the service rendering parameter being used for rendering a media scattering effect of a first map, and a service environment configuration of the first map being the sample environment configuration.

| | S101 |
|---|---|
| Acquire a rendering rule | |
| Acquire a sample volume texture of a sample map generated by a first rendering rule, and determine, based on the sample volume texture, an actual rendering value of the sample map in a sample environment configuration and reference depth data of the sample map | S102 |
| Determine a predicted rendering value of the sample map in the sample environment configuration based on an initial rendering parameter in a second rendering rule and the reference depth data | S103 |
| Train the initial rendering parameter based on the predicted rendering value and the actual rendering value to obtain a service rendering parameter matching the sample environment configuration | S104 |

FIG. 3

**Description**

RELATED APPLICATION

This application is based upon and claims priority to Chinese Patent Application No. 2023103210068, filed on March 29, 2023.

FIELD OF THE TECHNOLOGY

The present disclosure relates to the technical field of computers, and in particular, to a data processing method and apparatus, a computer device, a computer-readable storage medium, and a computer program product.

BACKGROUND OF THE DISCLOSURE

In the related art, when a scattering real-time rendering system simulates atmospheric scattering, the following two phenomena are mainly included: a sky effect and an aerial perspective effect. The sky effect refers to the fact that the sky appears blue during the daytime and red at the horizon in the evening. It is usually realized with the help of a sky sphere. The aerial perspective effect refers to a fog effect (also referred to as atmospheric fog) caused by atmospheric scattering phenomena on a distant object.

For the phenomenon of the aerial perspective effect, in a scattering simulation method in the related art, a rendering scheme (for example, a Hoffman02 algorithm) obtained based on a simplification of a physical formula may be adopted to simulate the phenomenon. However, since the rendering scheme simplifies a physical algorithm, there is a problem of difficult parameter adjustment. Therefore, to achieve a target effect, in most cases, a rendering parameter in the rendering scheme needs to be continuously manually attempted, and fine adjustment is performed on the rendering parameter. This is very time-consuming and difficult for art creation. That is, the scattering simulation method in the related art needs to spend lots of manpower costs and time costs. Consequently, taking both the rendering efficiency and the rendering effect into consideration is difficult.

SUMMARY

Embodiments of the present disclosure provide a data processing method and apparatus, a computer device, a computer-readable storage medium, and a computer program product, which may improve a rendering effect of scatter simulation under the condition of ensuring the rendering efficiency.

The embodiments of the present disclosure provide a data processing method, including the following operations: acquiring a rendering scheme, the rendering scheme including a first rendering scheme and a second rendering scheme; the first rendering scheme being configured for rendering a virtual scene containing a medium; and the second rendering scheme being configured for rendering a medium scattering effect; acquiring a sample volume texture of a sample image generated by the first rendering scheme; determining, based on the sample volume texture, an actual rendering value of the sample image in a sample environment configuration and reference depth data of the sample image; determining a predicted rendering value of the sample image in the sample environment configuration based on a rendering parameter of the second rendering scheme and the reference depth data; and training the rendering parameter based on the predicted rendering value and the actual rendering value to obtain a service rendering parameter matching the sample environment configuration, the service rendering parameter being configured for rendering a medium scattering effect of a first image; and a service environment configuration of the first image being the sample environment configuration.

The embodiments of the present disclosure provide a data processing method, including the following operations: acquiring a service environment configuration for a first image when performing scattering simulation rendering on the first image; acquiring, if the service environment configuration is a sample environment configuration, a service rendering parameter matching the sample environment configuration, the service rendering parameter being obtained after training a rendering parameter of a second rendering scheme based on a predicted rendering value and an actual rendering value of a sample image in the sample environment configuration; the actual rendering value of the sample image being determined based on a sample volume texture of the sample image; the sample volume texture of the sample image being generated by a first rendering scheme; the first rendering scheme being configured for rendering a virtual scene containing a medium; and the second rendering scheme being configured for rendering a medium scattering effect; and rendering a medium scattering effect of the first image based on the service rendering parameter and the second rendering scheme to obtain a second image.

The embodiments of the present disclosure provide a data processing apparatus, including: a rule acquisition module configured to acquire a rendering scheme, the rendering scheme including a first rendering scheme and a second rendering scheme; the first rendering scheme being configured for rendering a virtual scene containing a medium; and the second rendering scheme being configured for rendering a medium scattering effect; a reference module configured to acquire a sample volume texture of a sample image generated by the first rendering scheme and determine, based on the sample volume texture, an actual rendering value of the sample image in a sample environment configuration and reference depth data of the sample image; a prediction module configured to determine a predicted rendering value of the sample image in the sample environment configuration based on a rendering parameter of the second rendering scheme and the reference depth data; and an adjusting module configured to train the rendering parameter based on the predicted rendering value and the actual rendering value to obtain a service rendering parameter matching the sample environment configuration, the service rendering parameter being configured for rendering a medium scattering effect of a first image; and a service environment configuration of the first image being the sample environment configuration.

The embodiments of the present disclosure provide a data processing apparatus, including: a configuration acquisition module configured to acquire a service environment configuration for a first image when performing scattering simulation rendering on the first image; a service parameter acquisition module configured to acquire, if the service environment configuration is a sample environment configuration, a service rendering parameter matching the sample environment configuration, the service rendering parameter being obtained after training a rendering parameter of a second rendering scheme based on a predicted rendering value and an actual rendering value of a sample image in the sample environment configuration; the actual rendering value of the sample image being determined based on a sample volume texture of the sample image; the sample volume texture of the sample image being generated by a first rendering scheme; the first rendering scheme being configured for rendering a virtual scene containing a medium; and the second rendering scheme being configured for rendering a medium scattering effect; and a rendering module configured to render a medium scattering effect of the first image based on the service rendering parameter and the second rendering scheme to obtain a second image.

The present disclosure provides a processor, a memory, and a network interface, the processor being connected to the memory and the network interface, the network interface being configured to provide a data communication function, the memory being configured to store a computer program, and the processor being configured to invoke the computer program to cause the computer device to perform the data processing method provided by the embodiments of the present disclosure.

The embodiments of the present disclosure provide a computer-readable storage medium, having a computer program stored therein, the computer program being adapted to be loaded and executed by a processor, to cause a computer device having the processor to perform the data processing method provided by the embodiments of the present disclosure.

The embodiments of the present disclosure provide a computer program product, including a computer program, the computer program being stored in a computer-readable storage medium; a processor of a computer device reading the computer program from the computer-readable storage medium, and the processor executing the computer program to cause the computer device to perform the data processing method provided in the embodiments of the present disclosure.

In the embodiments of the present disclosure, a computer device having a rendering function acquires the rendering scheme when performing simulation rendering on the medium scattering effect. The rendering scheme herein may include the first rendering scheme configured for rendering the virtual scene containing a medium and the second rendering scheme configured for rendering the medium scattering effect. When acquiring the sample image, the computer device does not need to consume a large amount of time to manually adjust the rendering parameter of the second rendering scheme, but may directly acquire the volume texture (i.e., the sample volume texture) of the sample image through the first rendering scheme, and may further rapidly determine the actual rendering value of the sample image in the sample environment configuration and the reference depth data of the sample image based on the sample volume texture.

In addition, the computer device may determine the predicted rendering value of the sample image in the sample environment configuration through the rendering parameter (i.e., the rendering parameter before training) in the second rendering scheme and the reference depth data. Then, the computer device may train the rendering parameter based on the predicted rendering value and the actual rendering value to obtain the service rendering parameter matching the sample environment configuration. The service rendering parameter herein is a training-completed rendering parameter. The service rendering parameter may be configured for rendering the medium scattering effect of the first image, and the service environment configuration of the first image is the sample environment configuration. It can be seen that in the embodiments of the present disclosure, the initial parameter in the second rendering scheme does not need to be manually adjusted, but the hard-to-adjust rendering parameter in the second rendering scheme may be directly deduced by acquiring intermediate data, i.e., the sample volume texture, of the physical algorithm of the first rendering scheme. This means that in the embodiments of the present disclosure, when the medium scattering effect is rendered, the second rendering scheme is not directly used, but the service rendering parameter is trained by combining the first rendering scheme and the second rendering scheme so that the service rendering parameter may be obtained more quickly and accurately. In this way, when the medium scattering effect of the first image is rendered subsequently, not only the rendering effect may be ensured, but also the rendering efficiency may be improved. That is, the scattering simulation method used in the embodiments of the present disclosure may take both the rendering effect and the rendering efficiency into consideration.

## BRIEF DESCRIPTION OF THE DRAWINGS

To more clearly illustrate the technical solutions in the embodiments of the present disclosure or in the related art, the drawings required in the descriptions of the embodiments or the related art will be briefly introduced below. It is clear that the drawings described below are only some embodiments of the present disclosure, and a person skilled in the art may obtain other drawings according to these drawings without involving any inventive effort.

FIG. 1 is a schematic structural diagram of a network architecture according to an embodiment of the present disclosure.

FIG. 2 is a schematic diagram of a framework for training rendering parameters according to an embodiment of the present disclosure.

FIG. 3 is a schematic flowchart of a data processing method according to an embodiment of the present disclosure.

FIG. 4 is a schematic flowchart of a training parameter according to an embodiment of the present disclosure.

FIG. 5 is a schematic flowchart of another data processing method according to an embodiment of the present disclosure.

FIG. 6 is a schematic diagram of a scene for rendering a medium scattering effect according to an embodiment of the present disclosure.

FIG. 7 is a schematic structural diagram of a data processing apparatus according to an embodiment of the present disclosure.

FIG. 8 is a schematic structural diagram of another data processing apparatus according to an embodiment of the present disclosure.

FIG. 9 is a schematic diagram of a computer device according to an embodiment of the present disclosure.

FIG. 10 is a schematic structural diagram of a data processing system according to an embodiment of the present disclosure.

## DESCRIPTION OF EMBODIMENTS

The technical solutions in embodiments of the present disclosure are clearly and completely described in the following with reference to the accompanying drawings in the embodiments of the present disclosure. Apparently, the described embodiments are merely some rather than all of the embodiments of the present disclosure. All other embodiments obtained by a person skilled in the art based on the embodiments of the present disclosure without inventive efforts shall fall within the protection scope of the present disclosure.

Light scattering refers to a phenomenon that when a light beam passes through an uneven medium, a part of the light beam deviates from an original direction and dispersedly spreads, and light may also be seen from a side direction. When light passes through a medium such as air with dirt or a colloidal solution, and when solar radiation encounters air molecules, dust particles, cloud droplets, and other particles in the atmosphere, scattering may occur. For example, a beam of light is white after passing through the diluted milk, but is light blue when viewed from the side and above. The medium herein may include a gas medium (for example, air), a liquid medium (for example, water, milk, and oil), and a solid medium (for example, glass). This is not limited herein. If the medium is air, a virtual scene containing the medium and rendered by the first rendering scheme may be a rendered sky effect, and a medium scattering effect rendered by the second rendering scheme may be a rendered aerial perspective effect. The rendered sky effect may be a rendered effect that the sky appears blue during the daytime and red at the horizon in the evening. The rendered aerial perspective effect may be a fog effect caused by atmospheric scattering phenomena on a distant object.

Atmospheric scattering refers to a scattering phenomenon that occurs when light passes through substances such as gas modules and aerosol particles in the atmosphere, and is also a main reason why the sky appears blue during the daytime and red at the horizon in the evening on the Earth. In graphics, an atmospheric scattering system generally includes simulations of three physical phenomena: Rayleigh scattering, Mie scattering, and light energy absorption (for example, ozone absorption) by air.

In this embodiment of the present disclosure, a scattering proportion of intensities of light of different colors (i.e., different wave lengths) may be represented through scattering coefficients. Since scattering occurs in all directions, a phase function may be adopted to represent a proportion of light scattered at different angles. Simulations of several common physical phenomena in the atmospheric scattering system are described below.

Physical phenomenon 1: Rayleigh scattering. The scattering is caused by air molecules, and intensities of the scattered light in various directions are different. The intensities are inversely proportional to the fourth power of a wave length of incident light. Therefore, the Rayleigh scattering is the fundamental reason why the atmosphere appears blue during the daytime and orange-red at the horizon in the evening. Formulas associated with the Rayleigh scattering may refer to the following formula (1) and formula (2):

$$\beta_R^S(h,\lambda) = \frac{8\pi^3 \left(n^2-1\right)^2}{3N\lambda^4} e^{-\frac{h}{H_R}} \quad (1),$$

where $\beta_R^S(h,\lambda)$ represents a scattering coefficient of the Rayleigh scattering, and the scattering coefficient represents a proportion of loss to scattering of light after a collision; h represents a height of a pixel point (i.e., a pixel); $\lambda$ represents the wave length of the incident light; n represents a refractive index of air; N represents the molecular number density of the standard atmosphere, i.e., the number of molecules per cubic meter; and $H_R$ represents a parameter related to an altitude.

When the Rayleigh scattering is simulated, the scattering coefficient in this embodiment of the present disclosure may indicate a calculation result of $\frac{8\pi^3 \left(n^2-1\right)^2}{3N\lambda^4}$ in formula (1), often expressed in terms of $\beta_R$ (i.e., a first scattering parameter). The parameter is usually calculated through the foregoing formula according to a red-green-blue (RGB) value corresponding to a wave length and reference data obtained through atmospheric measurement. Sometimes, the parameter is also exposed to a service object (for example, a user) so that the service object manually adjusts a final result to simulate atmospheric effects of various environment configurations (for example, planets such as the Mars or the Earth).

$$P_R(\mu) = \frac{3}{16\pi}\left(1+\mu^2\right) \quad (2),$$

where $P_R(\mu)$ represents a phase function of the Rayleigh scattering and is configured for controlling a scattering geometry, and $P_R(\mu)$ represents a relative ratio of light lost in a particular direction. $\frac{3}{16\pi}$ is used as a normalization factor. Therefore, an integral on a unit sphere is 1; $\mu = \cos\theta$, representing a cosine value of $\theta$; and $\theta$ may be configured for representing an included angle between directional light and a current line of sight.

Physical phenomenon 2: Mie scattering. The Mie scattering is caused by ellipsoidal particles, such as aerosol particles and water-drop particles, in the air. The Mie scattering shows relatively strong anisotropy. That is, a relatively large part of light passing through the particles is scattered towards a direction that forms an obtuse angle with an original light propagation direction, or even an opposite direction of the light propagation direction. Therefore, the Mie scattering is a main cause of a circle of whitish halos around the sun during the daytime. Formulas associated with the Mie scattering may refer to the following formula (3) and formula (4):

$$\beta_M^S(h,\lambda) = \beta_M^S(0,\lambda) e^{-\frac{h}{H_M}} \quad (3),$$

where $\beta_M^S(h,\lambda)$ represents a scattering coefficient of the Mie scattering and may be expressed in terms of $\beta_M$ (i.e., a second scattering parameter); h and $H_M$ are configured for representing parameters related to an altitude; $\lambda$ is configured for representing the wave length of the incident light.

$$P_M(\mu) = \frac{3}{8\pi} \frac{(1-g^2)(1+\mu^2)}{(2+g^2)(1+g^2-2g\mu)^{\frac{3}{2}}} \quad (4),$$

where $P_M(\mu)$ represents a common phase function (CornetteShanks phase function) of the Mie scattering; g is a parameter configured for controlling anisotropy of the Mie scattering. Certainly, in this embodiment of the present disclosure, other phase functions (for example, Heyney Greenstein Phase function) may alternatively be adopted to simulate the Mie scattering phenomenon.

Physical phenomenon 3: light energy absorption by air. The absorption mainly exists in the ozone phenomenon. However, since the impact is small, the simulation effect of this physical phenomenon is temporarily ignored in this embodiment of the present disclosure.

A data processing method provided by this embodiment of the present disclosure is described below with reference to the simulation of the foregoing several physical phenomena. A network architecture in an embodiment of the present disclosure is first described herein.

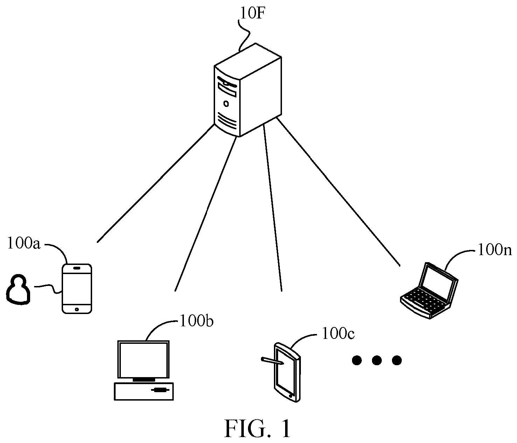

Referring to FIG. 1, FIG. 1 is a schematic structural diagram of a network architecture according to an embodiment of the present disclosure. As shown in FIG. 1, the network architecture may include a server 10F and a terminal device cluster. The terminal device cluster may include one or more terminal devices. As shown in FIG. 1, the terminal device cluster may include a terminal device 100a, a terminal device 100b, a terminal device 100c, ..., and a terminal device 100n. As shown in FIG. 1, the terminal device 100a, the terminal device 100b, the terminal device 100c, ..., and the terminal device 100n may establish a network connection with the foregoing server 10F so that each terminal device may perform data interaction with the server 10F through the network connection. The network connection herein does not limit a connection manner, and may be a direct or indirect connection in a wired communication manner, may be a direct or indirect connection in a wireless communication manner, or may be a connection in other manners. This is not limited in the embodiments of the present disclosure herein.

Each terminal device in the terminal device cluster may include smart terminals with a data processing function such as a smartphone, a tablet computer, a notebook computer, a desktop computer, a smart speaker, a smart watch, an in-vehicle terminal, and a smart television. Each terminal device in the terminal device cluster shown in FIG. 1 may be installed with an application client. When the application client runs in each terminal device, the application client may perform data interaction with the server 10F shown in FIG. 1. The application client may include application clients such as a social client, a multimedia client (e.g., a video client), an entertainment client (e.g., a game client), an information flow client, an educational client, and a livestreaming client. The application client may be an independent client, or may be an embedded sub-client integrated in a client (such as the social client, the educational client, or the multimedia client). This is not limited herein.

As shown in FIG. 1, the server 10F in this embodiment of the present disclosure may be a server corresponding to the application client. The server 10F may be an independent physical server, may be a server cluster or a distributed system including a plurality of physical servers, or may be a cloud server providing a cloud computing service. The numbers of terminal devices and servers are not limited in this embodiment of the present disclosure.

For ease of understanding, in this embodiment of the present disclosure, one terminal device may be selected from a plurality of terminal devices shown in FIG. 1 as a target terminal device. For example, in this embodiment of the present disclosure, the terminal device 100a shown in FIG. 1 may be used as the target terminal device, and the target terminal device may be integrated with an application client. In this case, the target terminal device may implement data interaction with the server 10F through a service data platform corresponding to the application client. A component (i.e., an atmospheric rendering component) configured to perform scattering simulation rendering may be deployed in a service engine (for example, a game engine and a physical simulation engine) in the application client herein. For example, the atmospheric rendering component deployed by the game engine (for example, a UE4 engine) may be a SkyAtmosphere component (also referred to as a SkyAtmosphere module). The atmospheric rendering component may be configured to train a rendering parameter matching a sample environment configuration.

The sample environment configuration (which is also referred to as a preset background configuration hereinafter) herein may be configured by a service object (for example, a user) according to an actual simulation environment. The configuration herein may include a first configuration associated with a planet, may include a second configuration associated with position information of a planet, and may further include other types of configurations. This is not limited herein. For example, the service object may select a planet (for example, the Mars) from configuration options (for example, the Earth, the Mars, the moon, and a customized planet) corresponding to the first configuration as the first configuration so that the computer device subsequently simulates a rendering effect of an image on the Mars. In some embodiments, after making a selection for the first configuration, the service object may further make a selection for the second configuration based on the first configuration. For example, after the first configuration is selected as the Earth, the service object may further select, based on the first configuration, a piece of position information (for example, the equator) from configuration options (for example, the equator, the arctic, and customized longitude and latitude coordinates) corresponding to the second configuration as the second configuration so that the computer device subsequently simulates a rendering effect of an image on the equator of the Earth. In other words, in this embodiment of the present disclosure, various scattering systems may be adjusted to simulate rendering effects of various planets, or various rendering effects may be customized. Examples are not provided herein again.

A scattering simulation method according to this embodiment of the present disclosure may be performed by a computer device having a rendering function. The computer device may be the server 10F shown in FIG. 1, or may be any terminal device in the terminal device cluster shown in FIG. 1, for example, the terminal device 100a. This is not limited herein.

In a parameter training process, the computer device may acquire a rendering scheme. The rendering scheme herein may include not only a first rendering scheme configured for rendering a virtual scene containing a medium, for example, a Hillaire20 algorithm, but also a second rendering scheme configured for rendering a medium scattering effect, for example, a Hoffman02 algorithm. To reduce manpower costs and time costs, the computer device may acquire intermediate data (i.e., a sample volume texture of a sample image, for example, a 3D Volume texture) obtained through the first rendering scheme. The sample volume texture (which is also referred to as a volume texture hereinafter) is generated by rendering an image (which is also referred to as a sample image hereinafter) using the first rendering scheme. The first rendering scheme is used to rendering the image according to a preset background configuration. The computer device may further determine, based on the sample volume texture, an actual rendering value (which is also referred to as a first rendering value hereinafter) of the sample image in the preset background configuration and reference depth data (which is also referred to as depth data hereinafter) of the sample image. The first rendering value of the image being a rendering value used by the first rendering scheme in the preset background configuration. The actual rendering value and the reference depth data of the sample image herein are both determined according to a reference image of the sample image in the preset background configuration, and the actual rendering value refers to a rendering value of the reference image. The reference depth data is initial depth data of the reference image, i.e., being configured for representing a distance between a current observation point (for example, a position of a virtual character in a game scene) and a target point (for example, a coordinate position corresponding to a to-be-rendered pixel point) of the reference image. Then, the computer device may determine a predicted rendering value of the sample image in the sample environment configuration through a rendering parameter of the second rendering scheme and the reference depth data. Specifically, the computer device may predict a rendering value (which is also referred to as a second rendering value hereinafter) for rendering the sample image according to the preset background configuration based on a rendering parameter of the second rendering scheme and the depth data. The computer device may further train (or adjust) the rendering parameter based on the predicted rendering value and the actual rendering value to obtain a service rendering parameter (which is also referred to as an adjusted rendering parameter) matching the sample environment configuration, and the service rendering parameter includes a first scattering parameter, a second scattering parameter, and a luminance parameter. The service rendering parameter herein is configured for rendering a medium scattering effect of a first image, and an environment configuration (i.e., a service environment configuration) of the first image is the sample environment configuration.

The scattering simulation method according to this embodiment of the present disclosure may be applied to a plurality of scenes. An image (which is also referred to as a sample image hereinafter) in the present disclosure may be a game picture in a game scene, a picture in a virtual reality scene, an augmented reality scene or an extended reality scene. For example, in a game scene, a sample image obtained by the computer device may be a game image (for example, an image corresponding to a wild shooting scene in a competitive game). In this case, the computer device may train the rendering parameter in the second rendering scheme by combining the first rendering scheme and the second rendering scheme to quickly and accurately obtain the service rendering parameter so that a game rendering effect can be more accurately presented when the service rendering parameter is subsequently applied, thereby improving game experience of a user. For another example, in a virtual reality scene (i.e., a VR scene), the sample image obtained by the computer device may be a virtual image (for example, an image corresponding to a forest scene in a virtual world). In this case, the computer device may train the rendering parameter in the second rendering scheme by combining the first rendering scheme and the second rendering scheme to quickly and accurately obtain the service rendering parameter so that a rendered aerial perspective effect may be simulated more accurately and in real time when the service rendering parameter is subsequently applied. Thus, a user in the virtual world has an immersive feeling, thereby improving the interest.

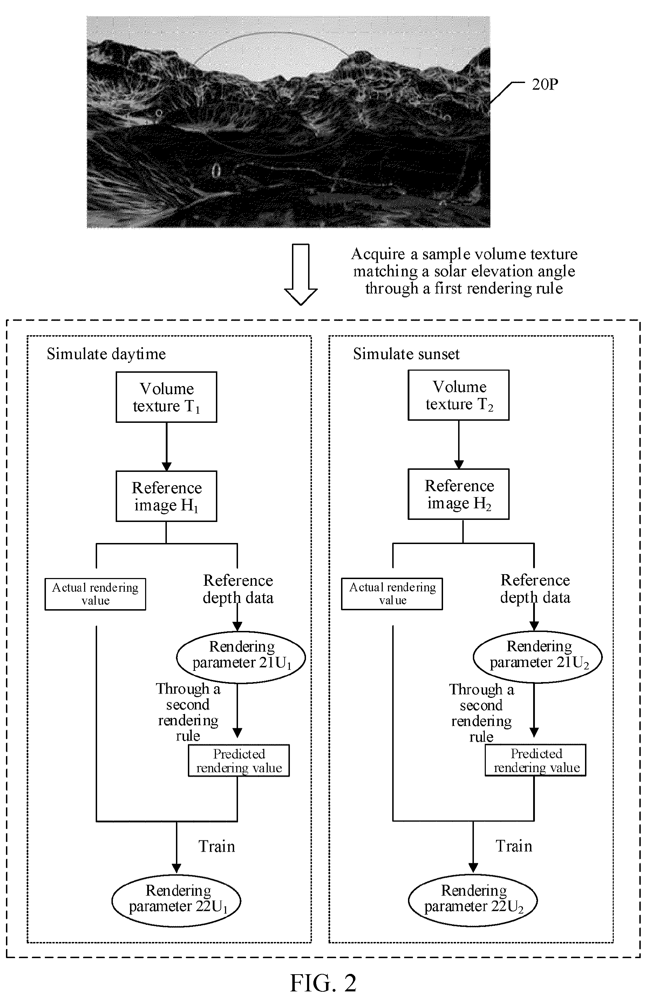

For ease of understanding, in some embodiments, referring to FIG. 2, FIG. 2 is a schematic diagram of a framework for training rendering parameters according to an embodiment of the present disclosure. As shown in FIG. 2, the computer device in this embodiment of the present disclosure may be a computer device having a rendering function. The computer device may be any terminal device in the terminal device cluster shown in FIG. 1, for example, the terminal device 100a. The computer device may further be the server 10F shown in FIG. 1. The computer device is not limited herein. The medium in this embodiment of the present disclosure may be air as an example, which means that a virtual scene including the medium may have a sky effect, and a rendered medium scattering effect may be an aerial perspective effect.

Since a rendering scheme (i.e., the second rendering scheme) configured for rendering the aerial perspective effect has a problem of difficult parameter adjustment, in a parameter training process, the computer device needs to acquire an image (i.e., a sample image), for example, an image 20P shown in FIG. 2, configured for training a rendering parameter of the second rendering scheme. The image 20P may be an original image on which scattering simulation rendering is not performed, or may be an image obtained after simulation rendering is performed on a sky effect of the original image. This is not limited herein.

The rendering scheme in this embodiment of the present disclosure may include not only a first rendering scheme (i.e., a new physical algorithm) configured for rendering the sky effect, but also the second rendering scheme (i.e., an old simplification algorithm) configured for rendering the aerial perspective effect. That is, in this embodiment of the present disclosure, the aerial perspective effect can be quickly and accurately rendered in real time by combining the old simplification algorithm and the new physical algorithm.

The computer device may acquire a plurality of sample volume textures of the image 20P in the sample environment configuration (for example, the earth) through the first rendering scheme. One sample volume texture generated by the first rendering scheme may be a volume texture that is acquired by the computer device for the image 20P and matches a virtual light source elevation angle (i.e., an elevation angle $\Phi$ corresponding to light emitted by a virtual light source) in the sample environment configuration. An angle interval of the virtual light source elevation angle may include a first angle threshold and a second angle threshold. Both the first angle threshold and the second angle threshold may be dynamically adjusted according to an actual requirement. This is not limited herein. The virtual light source may be a light source capable of emitting light, for example, a light source such as a flashlight and the sun.

When the virtual light source is the sun, the virtual light source elevation angle herein may be a solar elevation angle, i.e., an included angle between a solar ray and the horizontal line. For example, the first angle threshold may be -10 degrees, and the second angle threshold may be 90 degrees. In this embodiment of the present disclosure, if the solar elevation angle is a negative number, a sample volume texture matching the solar elevation angle is a volume texture configured for simulating that the sun sinks below the horizontal line. If the solar elevation angle is 0 degree, the sample volume texture matching the solar elevation angle is a volume texture configured for simulating sunset. If the solar elevation angle is a positive number, the sample volume texture matching the solar elevation angle is a volume texture configured for simulating daytime. If the solar elevation angle is 90 degrees, the sample volume texture matching the solar elevation angle is a volume texture configured for simulating noon.

For ease of description, in this embodiment of the present disclosure, there may be two sample volume textures, including a volume texture $T_1$ configured for simulating daytime and a volume texture $T_2$ configured for simulating sunset. A virtual light source elevation angle (for example, an elevation angle $\Phi_1$) corresponding to the volume texture $T_1$ may be 10 degrees, and a virtual light source elevation angle (for example, an elevation angle $\Phi_2$) corresponding to the volume texture $T_2$ may be 0 degree.

For the volume texture $T_1$, the computer device may determine a reference image, i.e., a reference image $H_1$ shown in FIG. 2, of the image 20P at the elevation angle $\Phi_1$ corresponding to the volume texture $T_1$, and then determine, based on the reference image $H_1$, an actual rendering value of the image 20P at the elevation angle $\Phi_1$ in the sample environment configuration and reference depth data. The reference depth data herein is configured for representing a distance between a current observation point (for example, a position of a virtual character in a game scene) and a target point (for example, a coordinate position corresponding to a to-be-rendered pixel point) of the reference image $H_1$. Then, the computer device may acquire a rendering parameter of the second rendering scheme, for example, a rendering parameter $21U_1$ matching the elevation angle $\Phi_1$, and then determine a predicted rendering value of the image 20P at the elevation angle $\Phi_1$ in the sample environment configuration through the second rendering scheme, the rendering parameter $21U_1$ and the reference depth data corresponding to the reference image $H_1$. In this case, the computer device may train the rendering parameter $21U_1$ based on the predicted rendering value and the actual rendering value of the image 20P at the elevation angle $\Phi_1$ to obtain a service rendering parameter, for example, a rendering parameter $22U_1$, matching the elevation angle $\Phi_1$ in the sample environment configuration. Similarly, for the volume texture $T_2$, the computer device may determine a reference image, i.e., a reference image $H_2$ shown in FIG. 2, of the image 20P at the elevation angle $\Phi_2$ corresponding to the volume texture $T_2$, and then determine, based on the reference image $H_2$, an actual rendering value of the image 20P at the elevation angle $\Phi_2$ in the sample environment configuration and reference depth data. The reference depth data herein is configured for representing a distance between a current observation point (for example, a position of a virtual character in a game scene) and a target point (for example, a coordinate position corresponding to a to-be-rendered pixel point) of the reference image $H_2$. Then, the computer device may acquire a rendering parameter of the second rendering scheme, for example, a rendering parameter $21U_2$ matching the elevation angle $\Phi_2$, and then determine a predicted rendering value of the image 20P at the elevation angle $\Phi_2$ in the sample environment configuration through the second rendering scheme, the rendering parameter $21U_2$ and the reference depth data corresponding to the reference image $H_2$. In this case, the computer device may train the rendering parameter $21U_2$ based on the predicted rendering value and the actual rendering value of the image 20P at the elevation angle $\Phi_2$ to obtain a service rendering parameter, for example, a rendering parameter $22U_2$, matching the elevation angle $\Phi_2$ in the sample environment configuration.

The rest may be deduced by analogy. The computer device may further refer to a parameter training method of the rendering parameter $22U_1$ and a rendering parameter $22U_2$ to obtain service rendering parameters matching others solar elevation angles in the sample environment configuration, and then service rendering parameters at the solar elevation angles may be determined as a service rendering parameter set matching the sample environment configuration. Each service rendering parameter in the service rendering parameter set may be configured for rendering an air projection effect of an image (i.e., a first image) of which a service environment configuration is the sample environment configuration.

It can be seen that since the scattering simulation (i.e., the atmospheric scattering simulation) method provided in this embodiment of the present disclosure does not need manual participation, the service rendering parameters of different solar elevation angles in the sample environment configuration are obtained by combining the first rendering scheme and the second rendering scheme so that when the aerial perspective effect of the first image is subsequently rendered in real time based on the service rendering parameters, labor costs and time costs can be greatly reduced. Thus, the rendering efficiency can be further improved while ensuring the rendering effect. That is, the atmospheric scattering simulation method can take both the rendering effect and the rendering efficiency into consideration.

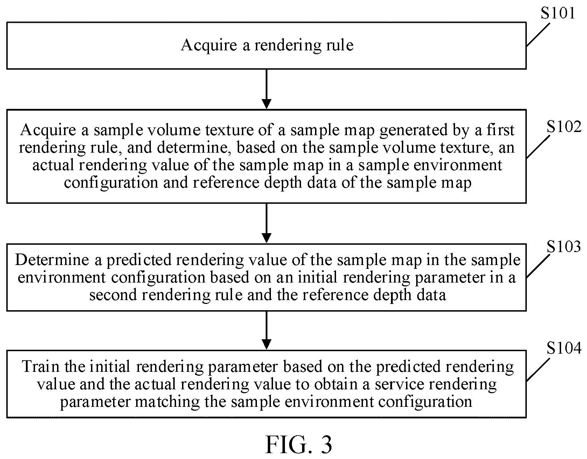

In this embodiment of the present disclosure, when rendering a medium scattering effect of an image, the computer device having the rendering function may train the rendering parameter in the second rendering scheme by combining the first rendering scheme and the second rendering scheme to quickly and accurately obtain the service rendering parameter matching the sample environment configuration. An implementation of the parameter training may refer to the embodiments corresponding to FIG. 3 to FIG. 6.

In some embodiments, referring to FIG. 3, FIG. 3 is a schematic flowchart of a data processing method according to an embodiment of the present disclosure. As shown in FIG. 3, the method may be performed by a computer device having a rendering function. The computer device may be a terminal device, for example, any terminal device in the terminal device cluster shown in FIG. 1, such as the terminal device 100a having a parameter training function. The computer device may further be a server, for example, the server 10F shown in FIG. 1. This is not limited herein. For ease of understanding, this embodiment of the present disclosure is described using an example in which the method is performed by a server having a rendering function. The method may include at least the following operation S101 to operation S104.

Operation S101: acquire a rendering scheme.

The rendering scheme herein may be a rule configured for performing scattering simulation rendering and may include a first rendering scheme and a second rendering scheme. The first rendering scheme may be configured for rendering a virtual scene (for example, a sky effect) containing a medium. For example, the first rendering scheme may be a Hillaire20 algorithm. The second rendering scheme may be configured for rendering a medium scattering effect (for example, an aerial perspective effect). For example, the second rendering scheme may be a Hoffman02 algorithm.

In this embodiment of the present disclosure, the first rendering scheme is a new physical algorithm compared with a rendering scheme in the related art, and the second rendering scheme may be an old simplification algorithm of the rendering scheme in the related art.

Operation S102: acquire a sample volume texture of a sample image generated by the first rendering scheme, and determine, based on the sample volume texture, an actual rendering value of the sample image in a sample environment configuration and reference depth data of the sample image. The sample volume texture (which is also referred to as a volume texture) is generated by rendering a sample image (which is also referred to as an image) using a first rendering scheme. The first rendering scheme is configured to rendering the image according to the preset background configuration. An actual rendering value (which is also referred to as a first rendering value) and the reference depth data (which is also referred to as depth data) of the sample image are determined based on the sample volume texture. The actual rendering value is a rendering value used by the first rendering scheme in the preset background configuration.

In this embodiment of the present disclosure, the computer device may acquire reference attributes for the sample image and further acquire, based on a virtual light source elevation angle included in the reference attributes and the sample image, the sample volume texture generated by the first rendering scheme and matched with the virtual light source elevation angle. Then, the computer device may acquire a preset depth data set including N pieces of initial depth data and obtain slice data of the sample volume texture at the virtual light source elevation angle based on the N pieces of initial depth data and the sample volume texture. The slice data herein may include N sub-images. N is a positive integer, and one sub-image corresponds to one piece of initial depth data. In this case, the computer device may determine, from the N sub-images, a reference image of the sample image at the virtual light source elevation angle, and may further use a rendering value of the reference image as the actual rendering value of the sample image in the sample environment configuration and use the initial depth data of the reference image as the reference depth data.

The reference attributes acquired by the computer device may be virtual light source elevation angles pre-configured by the computer device. For example, the virtual light source elevation angles are configured as 0 degree and 10 degrees by default. The reference attributes may alternatively be virtual light source elevation angles configured by a service object (for example, a user) corresponding to the computer device on a service configuration interface of an atmospheric rendering component according to an actual requirement. This is not limited herein. The service configuration interface herein refers to a display interface configured to configure various attributes of scattering simulation rendering. For example, the service configuration interface may include a configuration control configured to configure the virtual light source elevation angle (for example, the solar elevation angle), may include a configuration control configured to input rendering parameters, and may further include a configuration control configured to configure other attributes. This is not limited herein.

For ease of understanding, in this embodiment of the present disclosure, an implementation in which the computer device acquires the reference attributes for the sample image may be described by taking a configuration by a user as an example. For example, the computer device may display a service configuration interface for an atmospheric rendering component (for example, a SkyAtmosphere component in a UE4 engine) in a service engine. The service configuration interface herein may include a configuration control for the solar elevation angle.

An angle interval of the solar elevation angle may include a first angle threshold and a second angle threshold. After the sun sinks below the horizontal line, scattering phenomena exist. Therefore, the first angle threshold of the solar elevation angle in this embodiment of the present disclosure may be a negative value, for example, -10 degrees. The second angle threshold may be an angle value configured for simulating noon, for example, 90 degrees. Therefore, the angle interval of the solar elevation angle may be [-10°, 90°]. The solar elevation angle herein refers to an elevation angle corresponding to directional light emitted by the sun, i.e., an included angle between the sunlight and the horizontal line.

In this case, the service object corresponding to the computer device may perform an attribute addition operation on the configuration control of the reference attribute. In other words, the service object may randomly add one or more solar elevation angles to the angle interval of the solar elevation angles, for example, sequentially adding a plurality of solar elevation angles such as -5 degrees, 0 degree, 10 degrees, and 45 degrees. This is not limited herein. The attribute addition operation herein is a trigger operation of the service object to add the solar elevation angle. The trigger operation may include a contact operation such as clicking and long pressing and may include a non-contact operation such as a voice or a gesture. This is not limited herein.

In some embodiments, the computer device may respond to the attribute addition operation, acquire a first elevation angle configured for exporting a first sample volume texture (which is also referred to as a first volume texture), i.e., acquiring a first elevation angle configured for exporting a volume texture that simulates daytime in the sample environment configuration, and acquire a second elevation angle configured for exporting a second sample volume texture (which is also referred to as a second volume texture), i.e., acquiring a second elevation angle configured for exporting a volume texture that simulates sunset in the sample environment configuration. The first sample volume texture and the second sample volume texture herein both belong to the sample volume texture, and the first elevation angle is greater than the second elevation angle. In some embodiments, the computer device may use the first elevation angle and the second elevation angle as the reference attributes for the sample image.

Then, the computer device may further acquire, based on the solar elevation angle included in the reference attributes, the sample volume texture generated by the first rendering scheme and matched with the solar elevation angle. For example, if the reference attributes include four solar elevation angles: -5 degrees, 0 degree, 10 degrees, and 45 degrees, the computer device may acquire four sample volume textures generated by the first rendering scheme, including a sample volume texture with the solar elevation angle of -5 degrees, for example, a sample volume texture $T_1$; a sample volume texture with a solar elevation angle of 0 degree, for example, a sample volume texture $T_2$; a sample volume texture with a solar elevation angle of 10 degree, for example, a sample volume texture $T_3$; and a sample volume texture with a solar elevation angle of 45 degrees, for example, a sample volume texture $T_4$. In this way, after training the rendering parameter in the second rendering scheme by combining the first rendering scheme and the second rendering scheme, the computer device may subsequently obtain service rendering parameters corresponding to the four solar elevation angles, respectively.

In this embodiment of the present disclosure, the atmospheric rendering component (for example, the SkyAtmosphere component) in the service engine may be reformed, that is, a function of exporting intermediate data is added to the SkyAtmosphere component. For example, a function of exporting the sample volume texture may be added to the SkyAtmosphere component. In addition, a function of exporting a parameter g) is further added to the SkyAtmosphere component, that is, a function of exporting a parameter configured for controlling the Mie scattering anisotropy is added.

For ease of understanding, in this embodiment of the present disclosure, a virtual light source elevation angle (for example, the virtual light source elevation angle is 0 degree) may be used as an example to explain a parameter training process in the second rendering scheme. In other words, the sample volume texture generated by the first rendering scheme and matched with the virtual light source elevation angle includes a sample volume texture when the virtual light source elevation angle is 0 degree. The sample volume texture may be a 3D Volume texture obtained after the computer device performs texture sampling on the sample image using a vertex texture fetch (VFT) method in the second rendering scheme.

Therefore, when acquiring the preset depth data set including the N pieces of initial depth data, the computer device can obtain the slice data of the sample volume texture at the virtual light source elevation angle through the N pieces of initial depth data and the sample volume texture. The slice data may include N sub-images (i.e., N slices), a parameter g, a directional light vector corresponding to a virtual light source, and initial depth data corresponding to the slices. For example, the computer device may generate a texture grid of a sub-image corresponding to a piece of initial depth data by running a script, for example, a python script.

In some embodiments, the computer device needs to determine, from the N sub-images, the reference image of the sample image at the virtual light source elevation angle. The computer device may traverse the N sub-images, determine a traversed sub-image as a to-be-processed sub-image, and then rasterize a texture grid of the to-be-processed sub-image to obtain coordinate positions corresponding to pixel points in the to-be-processed sub-image. In this case, the computer device may perform superimposition on pixel values of the pixel points based on the coordinate positions corresponding to the pixel points to obtain a total pixel value corresponding to the to-be-processed sub-image, and obtain N total pixel values until the traversing ends. Then, the computer device may select, from the N sub-images, a sub-image having a maximum total pixel value as the reference image of the sample image at the virtual light source elevation angle, use a rendering value of the reference image rendered by the computer device according to the initial depth data, as the actual rendering value of the sample image in the sample environment configuration, and use the initial depth data of the reference image as the reference depth data.

For example, if there are three pieces of initial depth data in the preset depth data set, the initial depth data may include depth data $S_1$, depth data $S_2$, and depth data $S_3$. Then, the computer device may obtain a sub-image, for example, a sub-image $P_1$, corresponding to the depth data $S_1$ based on the depth data $S_1$ and the sample volume texture. Similarly, the computer device may further obtain a sub-image, for example, a sub-image $P_2$, corresponding to the depth data $S_2$; and a sub-image, for example, a sub-image $P_3$, corresponding to the depth data $S_3$. In some embodiments, the computer device may generate three sub-images and one data export file in a cache directory based on three sub-images (i.e., three slices) of the sub-image $P_1$, the sub-image $P_2$, and the sub-image $P_3$, the parameter g, the directional light vector corresponding to the virtual light source, and the initial depth data corresponding to the slices. The three sub-images may be stored in a tga format, and the data export file may be stored in a json format. In addition, the data export file may include the parameter g, the directional light vector corresponding to the virtual light source, and the initial depth data corresponding to the slices.

Then, the computer device may automatically run a script, such as a Python script, through the service engine, and rasterize a texture grid of each sub-image using a rasterization tool, such as NvDiffras, to obtain a total pixel value corresponding to each sub-image. For example, the computer device may rasterize a texture grid of the sub-image $P_1$ to obtain coordinate positions corresponding to the pixel points in the sub-image $P_1$, and then perform superimposition on pixel values of the pixel points based on the coordinate positions corresponding to the pixel points to obtain a total pixel value corresponding to the sub-image $P_1$. The superimposition herein may refer to first determining products of color values (for example, RGB values) and weights corresponding to the pixel points in the sub-image $P_1$, and then summing these products. Similarly, the computer device may further obtain a total pixel value corresponding to the sub-image $P_2$ and a total pixel value corresponding to the sub-image $P_3$.

In this case, the computer device may determine the maximum total pixel value from the total pixel value corresponding to the sub-image $P_1$, the total pixel value corresponding to the sub-image $P_2$, and the total pixel value corresponding to the sub-image $P_3$, and then determine the sub-image (for example, the sub-image $P_3$) having the maximum total pixel value as the reference image of the sample image at the virtual light source elevation angle. Then the computer device may use a rendering value of the sub-image $P_3$ as the actual rendering value of the sample image in the sample environment configuration and use the depth data $S_3$ as the reference depth data.

Operation S103: determine a predicted rendering value of the sample image in the sample environment configuration based on a rendering parameter of the second rendering scheme and the reference depth data. A rendering value (which is also referred to as a second rendering value) for rendering the sample image according to the preset background configuration is predicted based on a rendering parameter of the second rendering scheme and the reference depth data, to obtain the predicted rendering value (which is also referred to as a predicted second rendering value). The second rendering scheme is configured to render the image to generate a medium scattering effect.

The rendering parameter herein may include a first scattering parameter, a second scattering parameter, and a luminance parameter. The first scattering parameter and the second scattering parameter correspond to different scattering manners, respectively. The luminance parameter may be configured for indicating virtual light source luminance. The sample volume texture herein is the volume texture generated by the first rendering scheme and matched with the virtual light source elevation angle. The computer device may acquire an initial rendering value of the sample image, and then determine transmittance corresponding to the sample image based on an initial scattering coefficient of the first scattering parameter, an initial scattering coefficient of the second scattering parameter, and the reference depth data. In some embodiments, the computer device may determine an internal scattering parameter of the sample image at the virtual light source elevation angle based on the initial scattering coefficient of the first scattering parameter, the initial scattering coefficient of the second scattering parameter, the luminance parameter, and the reference depth data, and then determine the predicted rendering value of the sample image in the sample environment configuration based on the initial rendering value, the transmittance, and the internal scattering parameter.

In this embodiment of the present disclosure, a manner in which the computer device determines a rendering value of an image may refer to the following formula (5) to formula (9):

$$L(s,\theta) = L_0 F_{ex}(s) + L_{in}(s,\theta) \quad (5),$$

$$F_{ex}(s) = e^{-(\beta_R + \beta_M)s} \quad (6),$$

$$L_{in}(s,\theta) = \frac{\beta_R(\theta) + \beta_M(\theta)}{\beta_R + \beta_M} E_{sun}\left(1 - e^{-(\beta_R + \beta_M)s}\right) \quad (7),$$

$$\beta_R(\theta) = \frac{3}{16\pi}\beta_R(1 + \cos\theta) \quad (8),$$

$$\beta_M(\theta) = \frac{1}{4\pi}\beta_M \frac{(1-g)^2}{\left(1 + g^2 - 2g\cos(\theta)\right)^{\frac{3}{2}}}(1 + \cos\theta) \quad (9),$$

where $L_0$ represents an initial rendering value of an image, i.e., representing an object color in a scene, and may be 0 by default during first training; $F_{ex}(s)$ represents the transmittance and refers to a proportion of light left in a phenomenon that light transmitted to the line of sight is scattered and propagates out of the line of sight; $L_{in}(s, \theta)$ represents the internal scattering parameter, i.e., scattering of light outside the line of sight into the line of sight, which is also referred to as internal scattering; $\beta_R$ represents the first scattering parameter, i.e., a scattering coefficient of the first scattering (for example, the Rayleigh scattering); $\beta_M$ represents the second scattering parameter, i.e., a scattering coefficient of the second scattering (for example, the Mie scattering); s refers to a distance between a current observation point and a target point; $\theta$ is configured for representing an included angle between the directional light emitted by the virtual light source and the current line of sight; $E_{sun}$ is configured for representing the luminance parameter and indicating the virtual light source luminance, for example, sunlight luminance, and may be stored in a form of an RGB color; and g is configured for representing a parameter for controlling anisotropy of the Mie scattering and may be 0.8 by default.

In this embodiment of the present disclosure, the computer device may set initial values of the first scattering parameter, the second scattering parameter, and the luminance parameter in the rendering parameter to 1, i.e., the initial scattering coefficient of the first scattering parameter is 1, the initial scattering coefficient of the second scattering parameter is 1, and the initial value of the luminance parameter is 1. Therefore, when determining the predicted rendering value of the sample image in the sample environment configuration, the computer device may first determine the transmittance corresponding to the sample image according to the foregoing formula (6), the initial scattering coefficient (for example, 1) of the first scattering parameter, the initial scattering coefficient (for example, 1) of the second scattering parameter, and the reference depth data. Then, since the virtual light source elevation angle refers to an elevation angle corresponding to the directional light emitted by the virtual light source, the computer device needs to determine an included angle between the directional light emitted by the virtual light source and the current line of sight, then determine an updated scattering coefficient of the first scattering parameter based on the formula (8), the initial scattering coefficient of the first scattering parameter, and the included angle, and determine an updated scattering coefficient of the second scattering parameter based on the formula (9), the initial scattering coefficient of the second scattering parameter, and the included angle. Then, the computer device may determine the internal scattering parameter of the sample image at the virtual light source elevation angle based on the foregoing formula (7), the initial scattering coefficient of the first scattering parameter, the updated scattering coefficient of the first scattering parameter, the initial scattering coefficient of the second scattering parameter, the updated scattering coefficient of the second scattering parameter, the luminance parameter, and the reference depth data. Finally, the computer device may determine a product between the initial rendering value of the sample image and the transmittance based on the foregoing formula (5), and then use a sum of the determined product and the internal scattering parameter as the predicted rendering value of the sample image in the sample environment configuration.

Operation S104: train the rendering parameter of the second rendering scheme based on the predicted rendering value and the actual rendering value to obtain a service rendering parameter matching the sample environment configuration. Specifically, the rendering parameter (i.e., the second rendering parameter) of the second rendering scheme is adjusted based on the predicted second rendering value and the first rendering value to obtain the service rendering parameter (which is also referred to as an adjusted rendering parameter).

In this embodiment of the present disclosure, the computer device may determine a total rendering loss corresponding to the sample image based on the predicted rendering value and the actual rendering value, and then perform iterative training on the initial rendering parameter based on the total rendering loss to obtain a parameter training result. The computer device may determine, if the parameter training result indicates that an initial rendering parameter obtained after the iterative training satisfies a training cut-off condition, the initial rendering parameter that satisfies the training cut-off condition as the service rendering parameter matching the sample environment configuration. The service rendering parameter may be configured for rendering a medium scattering effect of a first image. A service environment configuration of the first image is the sample environment configuration.

In this embodiment of the present disclosure, a manner in which the computer device determines the total rendering loss based on a loss function, such as a mean squared error (MSE) function, of the initial rendering parameter may refer to the following formula (10):

$$Loss = MSE = \frac{\sum_{i=1}^{M}\left(Y_i - y_i\right)^2}{M} \quad (10),$$

where M represents a total number of pixel points in an image, and M is a positive integer; $Y_i$ is configured for representing a predicted rendering value of an i-th pixel point (for example, a pixel $X_i$) in the image; $y_i$ represents an actual rendering value of the pixel point $X_i$.

If the sample image includes M pixel points, and the M pixel points include the pixel point $X_i$, M being a positive integer, and i being a positive integer less than or equal to M, the computer device may first acquire the predicted rendering value $Y_i$ of the pixel point $X_i$ from the predicted rendering value, and then acquire the actual rendering value $y_i$ of the pixel point $X_i$ from the actual rendering value. Then, the computer device may use a rendering difference between the predicted rendering value $Y_i$ and the actual rendering value $y_i$ as a rendering loss of the pixel point $X_i$ until rendering losses corresponding to the M pixel points are obtained. At this time, the computer device may determine the total rendering loss corresponding to the sample image based on the foregoing formula (10) and the M rendering losses.

In an implementation process, the computer device may acquire the training cut-off condition associated with the initial rendering parameter. The training cut-off condition may be that the total rendering loss does not continue to decrease after multiple rounds (for example, 10 rounds), that is, parameter training is stopped. In some embodiments, the training cut-off condition may alternatively be that the total rendering loss is less than or equal to a loss threshold in the training cut-off condition, for example, the loss threshold may be 0.01, i.e., parameter training is stopped. Alternatively, in some other embodiments, the training cut-off condition may alternatively be that the total rendering loss is less than or equal to the loss threshold in the training cut-off condition, and training duration is greater than a training duration threshold in the training cut-off condition, i.e., parameter training is stopped.

The computer device may use, if the parameter training result indicates that the initial rendering parameter obtained after the iterative training satisfies the training cut-off condition, the initial rendering parameter that satisfies the training cut-off condition as the service rendering parameter matching the sample environment configuration. In some embodiments, the computer device may perform, if the parameter training result indicates that the initial rendering parameter obtained after the iterative training does not satisfy the training cut-off condition, parameter adjustment on the initial rendering parameter based on the total rendering loss that does not satisfy the training cut-off condition. In some embodiments, the computer device may use the adjusted initial rendering parameter as a transition rendering parameter, perform iterative training on the transition rendering parameter, and use, until a transition rendering parameter obtained after the iterative training satisfies the training cut-off condition, the transition rendering parameter that satisfies the training cut-off condition as the service rendering parameter matching the sample environment configuration.

If the parameter training result indicates that the initial rendering parameter obtained after the iterative training does not satisfy the training cut-off condition, the initial rendering parameter is adjusted according to an optimization algorithm, for example, the gradient descent (GD) algorithm, or the stochastic gradient descent (SGD) algorithm, or the Adam algorithm. For example, in the GD algorithm, an objective function (e.g., the loss function) is minimized by adjusting the initial rendering parameter.

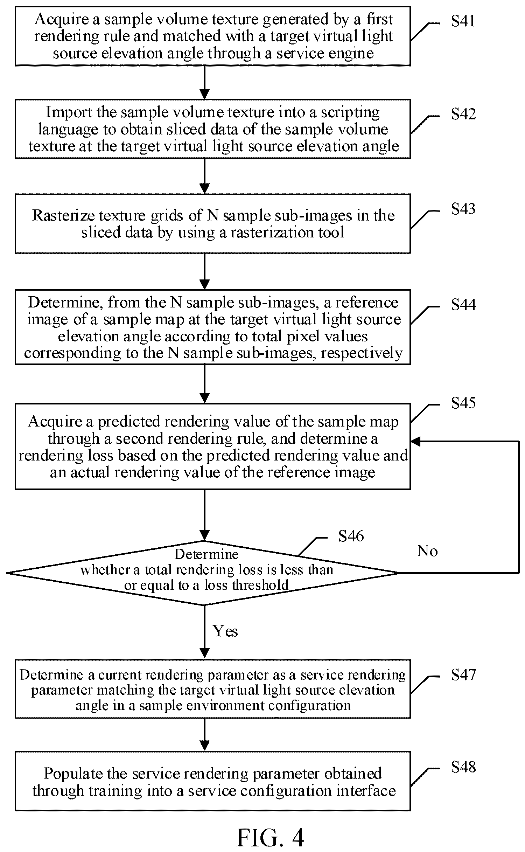

In some embodiments, referring to FIG. 4, FIG. 4 is a schematic flowchart of a training parameter according to an embodiment of the present disclosure. As shown in FIG. 4, the schematic flowchart in this embodiment of the present disclosure may include operation S41 to operation S48. Specifically, a virtual light source elevation angle $\Phi$ (i.e., a target virtual light source elevation angle, for example, $\Phi$ is 10 degrees) in a sample configuration environment is used as an example to describe a process of training a rendering parameter matching the target virtual light source elevation angle by combining the first rendering scheme and the second rendering scheme.

Operation S41: acquire a sample volume texture generated by a first rendering scheme and matched with a target virtual light source elevation angle through a service engine.

Operation S42: import the sample volume texture into a scripting language to obtain slice data of the sample volume texture at the target virtual light source elevation angle.

For example, the sample volume texture is imported into a Python scripting language to obtain slice data of the sample volume texture at the target virtual light source elevation angle based on N pieces of initial depth data in a preset depth data set and the sample volume texture. The slice data herein may include N sub-images (i.e., N slices), a parameter g, a directional light vector corresponding to a virtual light source, and initial depth data corresponding to the slices.

Operation S43: rasterize texture grids of the N sub-images in the slice data using a rasterization tool.

For example, the texture grids of the N sub-images in the slice data are rasterized using NvDiffras to obtain total pixel values corresponding to the sub-images.

Operation S44: determine, from the N sub-images, a reference image of a sample image at the target virtual light source elevation angle according to the total pixel values corresponding to the N sub-images, respectively.

Herein, a sub-image having a maximum total pixel value may be selected as the reference image of the sample image at the virtual light source elevation angle. A rendering value of the reference image herein may be used as an actual rendering value of the sample image at the target virtual light source elevation angle in a sample environment configuration. Initial depth data of the reference image may be used as reference depth data of the sample image at the target virtual light source elevation angle in the sample environment configuration.

Operation S45: acquire a predicted rendering value of the sample image through a second rendering scheme, and determine a rendering loss based on the predicted rendering value and an actual rendering value of the reference image.

Herein, the predicted rendering value of the sample image may be acquired according to the foregoing formula (5) to formula (10) and the second rendering scheme, and the rendering loss may be determined based on the predicted rendering value and the actual rendering value of the reference image. For example, the computer device may determine the predicted rendering value of the sample image at the target virtual light source elevation angle according to the foregoing formula (5) to formula (9), the initial rendering parameter ($\beta_R$, $\beta_M$, and $E_{sun}$) in the second rendering scheme, an included angle ($\theta$) between directional light and a current line of sight, and the reference depth data (s) corresponding to the reference image, and then may determine the total rendering loss corresponding to the sample image based on the foregoing formula (10), the predicted rendering value, and the actual rendering value.

Operation S46: determine whether the total rendering loss is less than or equal to a loss threshold.

If a determining result is yes, operation S47 is performed. That is, if the total rendering loss is less than or equal to the loss threshold, the computer device may determine that the initial rendering parameter satisfies a training cut-off condition, and then operation S47 may be performed, i.e., directly determining the initial rendering parameter as a service rendering parameter matching the target virtual light source elevation angle in the sample environment configuration.

If the determining result is no, the process returns to operation S45. That is, if the total rendering loss is greater than the loss threshold, the computer device may adjust the initial rendering parameter, then perform operation S46 again, re-determine a predicted rendering value of the sample image, determine a new total rendering loss based on the re-determined predicted rendering value and the actual rendering value to continue to compare the new total rendering loss with the loss threshold, and until the new total rendering loss is less than or equal to the loss threshold, continue to perform the following operation S47.

Operation S47: determine a current rendering parameter as the service rendering parameter matching the target virtual light source elevation angle in the sample environment configuration.

Operation S48: populate the service rendering parameter obtained through training into a service configuration interface.

The service rendering parameter herein is trained $\beta_R$, $\beta_M$, and $E_{sun}$, and the trained $\beta_R$, $\beta_M$, and $E_{sun}$ may be populated into corresponding attributes of a SkyAtmosphere component. That is, the trained $\beta_R$ $\beta_M$, and $E_{sun}$ are imported into the service engine so that the service rendering parameter may be directly applied when a medium scattering effect of an image is subsequently rendered at the target virtual light source elevation angle in the sample environment configuration. In this embodiment of the present disclosure, a vertex shader in the SkyAtmosphere component may be reformed, that is, an air perspective rendering algorithm of the second rendering scheme may be integrated. In a rendering process, air perspective may be efficiently calculated on a low-end device in real time using the second rendering scheme in conjunction with a scene object color $L_0$. Meanwhile, the computer device may further use its original sky drawing scheme, i.e., rendering the sky effect through the first rendering scheme.

In addition, the service rendering parameter herein may be a rendering parameter corresponding to the target virtual light source elevation angle in the sample environment configuration, and the target virtual light source elevation angle belongs to Z virtual light source elevation angles, where Z is a positive integer greater than 1. The Z virtual light source elevation angles are acquired when the computer device responds to an attribute addition operation. The attribute addition operation herein is a trigger operation performed on a configuration control of the reference attribute. A larger number of virtual light source elevation angles indicates a larger number of data fitting points for a service distribution diagram, thereby leading to higher accuracy of a service rendering distribution diagram obtained through fitting. Each rendering parameter includes a first scattering parameter, a second scattering parameter, and a luminance parameter. This means that the computer device may refer to the foregoing training manner for the service rendering parameter of the target virtual light source elevation angle to acquire rendering parameters corresponding to the Z virtual light source elevation angles.

In some embodiments, the computer device may determine, from Z rendering parameters, Z scattering coefficients associated with the first scattering parameters and fit determined Z scattering coefficients within an angle interval of the virtual light source elevation angle to obtain a first rendering distribution diagram associated with the first scattering parameters. Similarly, the computer device may further determine, from the Z rendering parameters, Z scattering coefficients associated with the second scattering parameters and fit determined Z scattering coefficients within the angle interval of the virtual light source elevation angle to obtain a second rendering distribution diagram associated with the second scattering parameters. Meanwhile, the computer device may also determine, from the Z rendering parameters, Z pieces of virtual light source luminance associated with the luminance parameters and fit determined Z pieces of virtual light source luminance within the angle interval of the virtual light source elevation angle to obtain a third rendering distribution diagram associated with the luminance parameters. In this case, the computer device may determine the first rendering distribution diagram, the second rendering distribution diagram, and the third rendering distribution diagram as a service rendering distribution diagram matching the sample environment configuration.

For example, if the virtual light source elevation angle is $\Phi_1$, a rendering parameter corresponding to the virtual light source elevation angle $\Phi_1$ may include a first scattering parameter (represented by $\beta_{R1}$), a second scattering parameter (represented by $\beta_{M1}$), and a luminance parameter (represented by $E_{sun1}$). If the virtual light source elevation angle is $\Phi_2$, a rendering parameter corresponding to the virtual light source elevation angle $\Phi_2$ may include a first scattering parameter (represented by $\beta R_2$), a second scattering parameter (represented by $\beta_{M2}$), and a luminance parameter (represented by $E_{sun2}$). The rest may be deduced by analogy. When fitting the first rendering distribution diagram associated with the first scattering parameters, the computer device may acquire Z data fitting points that may include a data fitting point 1, represented as: $(\Phi_1, \beta_{R1})$, a data fitting point 2, represented as: $(\Phi_2, \beta_{R2})$, ..., and a data fitting point Z, represented as: $(\Phi_Z, \beta_{RZ})$. Then, the computer device may fit the Z data fitting points within the angle interval of the virtual light source elevation angle to obtain the first rendering distribution diagram. That is, the first rendering distribution diagram may be a distribution diagram in which the virtual light source elevation angle $\Phi$ is used as a horizontal coordinate, and the first scattering parameter is used as a vertical coordinate.

When fitting the second rendering distribution diagram associated with the second scattering parameters, the computer device may acquire Z data fitting points that may include a data fitting point 1, represented as: $(\Phi_1, \beta_{M1})$, a data fitting point 2, represented as: $(\Phi_2, \beta_{M2})$, ..., and a data fitting point Z, represented as: $(\Phi_Z, \beta_{MZ})$. Then, the computer device may fit the Z data fitting points within the angle interval of the virtual light source elevation angle to obtain the second rendering distribution diagram. That is, the second rendering distribution diagram may be a distribution diagram in which the virtual light source elevation angle $\Phi$ is used as a horizontal coordinate, and the second scattering parameter is used as a vertical coordinate.

When fitting the third rendering distribution diagram associated with the luminance parameters, the computer device may acquire Z data fitting points that may include a data fitting point 1, represented as: $(\Phi_1, E_{sun1})$, a data fitting point 2, represented as: $(\Phi_2, E_{sun2})$, ..., and a data fitting point Z, represented as: $(\Phi_Z, E_{sunZ})$. Then, the computer device may fit the Z data fitting points within the angle interval of the virtual light source elevation angle to obtain the third rendering distribution diagram. That is, the third rendering distribution diagram may be a distribution diagram in which the virtual light source elevation angle $\Phi$ is used as a horizontal coordinate, and the luminance parameter ($E_{sun}$) is used as a vertical coordinate.

In some embodiments, the computer device may determine the first rendering distribution diagram, the second rendering distribution diagram, and the third rendering distribution diagram as the service rendering distribution diagram matching the sample environment configuration so that a rendering parameter corresponding to a virtual light source elevation angle in the sample environment configuration can be quickly read subsequently, and a medium scattering effect of any image in the sample environment configuration may be rendered in real time, thereby improving the rendering efficiency.

It can be seen that in this embodiment of the present disclosure, the initial rendering parameter in the second rendering scheme does not need to be manually adjusted, but intermediate data of the new physical algorithm of the first rendering scheme may be directly acquired, that is, the sample volume texture of the new physical algorithm of the first rendering scheme may be directly acquired, to deduce the hard-to-adjust rendering parameter in the second rendering scheme. This means that in the embodiments of the present disclosure, when the medium scattering effect is rendered, the second rendering scheme is not directly used, but the first rendering scheme and the second rendering scheme are combined to more quickly and accurately obtain the service rendering parameter. In this way, when the medium scattering effect of the first image is rendered subsequently, not only the rendering effect may be ensured, but also the rendering efficiency may be improved. That is, the scattering simulation method used in the embodiments of the present disclosure may take both the rendering effect and the rendering efficiency into consideration.

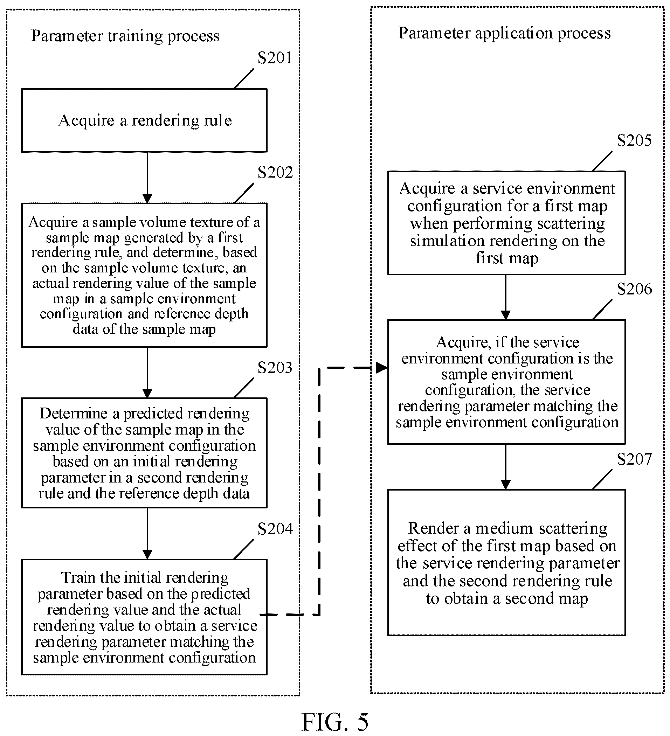

In some embodiments, referring to FIG. 5, FIG. 5 is a schematic flowchart of another data processing method according to an embodiment of the present disclosure. The method may be performed by a terminal device having a rendering function, for example, performed by any terminal device, for example, the terminal device 100a, in the terminal device cluster shown in FIG. 1, or may be performed by a server having a rendering function, for example, performed by the server 10F shown in FIG. 1, or may be performed interactively by a terminal device having a parameter application function and a server having a parameter training function. This is not limited herein. The method may include at least the following operation S201 to operation S207.

Operation S201: acquire a rendering scheme.

The rendering scheme herein includes a first rendering scheme and a second rendering scheme. The first rendering scheme may be configured for rendering a virtual scene containing a medium. The second rendering scheme may be configured for rendering a medium scattering effect.

Operation S202: acquire a sample volume texture of a sample image generated by the first rendering scheme, and determine, based on the sample volume texture, an actual rendering value of the sample image in a sample environment configuration and reference depth data of the sample image.

In this embodiment of the present disclosure, the computer device may acquire reference attributes for the sample image and further acquire, based on a virtual light source elevation angle included in the reference attributes and the sample image, the sample volume texture generated by the first rendering scheme and matched with the virtual light source elevation angle. Then, the computer device may acquire a preset depth data set including N pieces of initial depth data and obtain slice data of the sample volume texture at the virtual light source elevation angle based on the N pieces of initial depth data and the sample volume texture. The slice data herein may include N sub-images. N is a positive integer. In this case, the computer device may determine, from the N sub-images, a reference image of the sample image at the virtual light source elevation angle, and may further use a rendering value of the reference image as the actual rendering value of the sample image in the sample environment configuration and use the initial depth data of the reference image as the reference depth data.

Operation S203: determine a predicted rendering value of the sample image in the sample environment configuration based on an initial rendering parameter in the second rendering scheme and the reference depth data.

The initial rendering parameter herein may include a first scattering parameter, a second scattering parameter, and a luminance parameter. The first scattering parameter and the second scattering parameter correspond to different scattering manners, respectively. The luminance parameter may be configured for indicating virtual light source luminance. The actual rendering value is a rendering value corresponding to a reference image of the sample image. In this embodiment of the present disclosure, the computer device may acquire an initial rendering value of the sample image, and then determine transmittance corresponding to the sample image based on an initial scattering coefficient of the first scattering parameter, an initial scattering coefficient of the second scattering parameter, and the reference depth data. In some embodiments, the computer device may determine an internal scattering parameter of the sample image at the virtual light source elevation angle based on the initial scattering coefficient of the first scattering parameter, the initial scattering coefficient of the second scattering parameter, the luminance parameter, the reference depth data, and the virtual light source elevation angle corresponding to the reference image, and then determine the predicted rendering value of the sample image in the sample environment configuration based on the initial rendering value, the transmittance, and the internal scattering parameter.

Operation S204: train the initial rendering parameter based on the predicted rendering value and the actual rendering value to obtain a service rendering parameter matching the sample environment configuration.

In this embodiment of the present disclosure, the computer device may determine a total rendering loss corresponding to the sample image based on the predicted rendering value and the actual rendering value, and then perform iterative training on the initial rendering parameter based on the total rendering loss to obtain a parameter training result. The computer device may determine, if the parameter training result indicates that an initial rendering parameter obtained after the iterative training satisfies a training cut-off condition, the initial rendering parameter that satisfies the training cut-off condition as the service rendering parameter matching the sample environment configuration. The service rendering parameter may be configured for rendering a medium scattering effect of a first image. A service environment configuration of the first image is the sample environment configuration.

The data processing method in this embodiment of the present disclosure may include a parameter training process and a parameter application process. Operation S201 to operation S204 describe the parameter training process.

An implementation of the parameter training process may refer to the descriptions of operation S101 to operation S104 in the foregoing embodiment corresponding to FIG. 3. Details are not further described herein again.

The parameter application process may refer to the descriptions of the following operation S205 to operation S207.

Operation S205: acquire a service environment configuration for a first image when performing scattering simulation rendering on the first image.

In this embodiment of the present disclosure, when performing scattering simulation rendering on the first image, the computer device needs to acquire the service environment configuration for the first image, and then search, in a database storing sample environment configuration, whether the service environment configuration is a sample environment configuration already stored in the database.

Operation S206: acquire, if the service environment configuration is the sample environment configuration, a service rendering parameter matching the sample environment configuration.

The service rendering parameter is obtained after training the initial rendering parameter in the second rendering scheme based on the predicted rendering value and the actual rendering value of the sample image in the sample environment configuration. The actual rendering value of the sample image is determined based on the sample volume texture of the sample image. The sample volume texture of the sample image is generated by the first rendering scheme. The first rendering scheme is configured for rendering the virtual scene containing a medium. The second rendering scheme is configured for rendering the medium scattering effect. In this embodiment of the present disclosure, when the sample environment configuration is stored into the database, if the service environment configuration is the sample environment configuration, the computer device may search the database for a service rendering distribution diagram matching the sample environment configuration based on an association relationship of the sample environment configuration. The service rendering distribution diagram herein may include a first rendering distribution diagram associated with first scattering parameters, a second rendering distribution diagram associated with second scattering parameters, and a third rendering distribution diagram associated with luminance parameters. In some embodiments, the computer device needs to determine a to-be-rendered angle corresponding to the first image, then determines, in the first rendering distribution diagram, a scattering coefficient corresponding to the to-be-rendered angle as a first to-be-processed coefficient, determines, in the second rendering distribution diagram, a scattering coefficient corresponding to the to-be-rendered angle as a second to-be-processed coefficient, determines, in the third rendering distribution diagram, virtual light source luminance corresponding to the to-be-rendered angle as to-be-processed luminance, and may further determine the first to-be-processed coefficient, the second to-be-processed coefficient, and the to-be-processed luminance as the service rendering parameter matching the sample environment configuration.

In some embodiments, if the database does not have a sample environment configuration matching the service environment configuration, the computer device may use the service environment configuration as an updated sample configuration (i.e., a new sample environment configuration) and use the first image as an updated sample image (i.e., a new sample image) in the updated sample configuration. In some embodiments, the computer device may acquire a sample volume texture of the updated sample image generated by the first rendering scheme, determine an actual rendering value of the updated sample image in the updated sample configuration and reference depth data of the updated sample image based on the sample volume texture of the updated sample image, and further determine a predicted rendering value of the updated sample image in the updated sample configuration through the initial rendering parameter in the second rendering scheme and the reference depth data of the updated sample image. Then, the computer device may train the initial rendering parameter based on the actual rendering value of the updated sample image in the updated sample configuration and the predicted rendering value of the updated sample image in the updated sample configuration to obtain an updated rendering parameter matching the updated sample configuration, and may further store the updated sample configuration into the database based on the updated rendering parameter.

Operation S207: render a medium scattering effect of the first image based on the service rendering parameter and the second rendering scheme to obtain a second image.

The service rendering parameter herein may include rendering parameters corresponding to a plurality of to-be-rendered angles. In this embodiment of the present disclosure, the computer device may render the medium scattering effect of the first image with reference to the second rendering scheme shown in the foregoing formula (5) to formula (9) and the rendering parameters at the to-be-rendered angles to obtain second images matching the to-be-rendered angles. When the to-be-rendered angles are successively changed from a first angle threshold to a second angle threshold, the computer device may acquire a plurality of second images to render the medium scattering effect of the first image in real time.

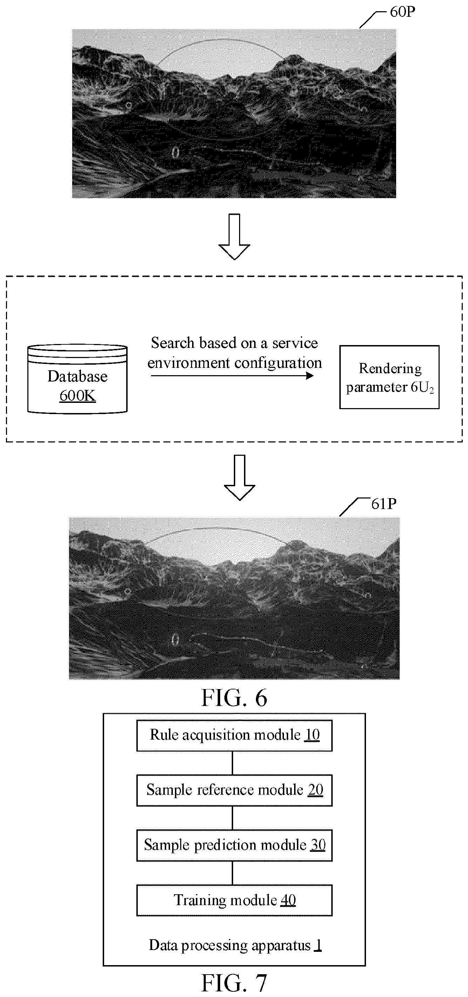

For ease of understanding, in some embodiments, referring to FIG. 6, FIG. 6 is a schematic diagram of a scene for rendering a medium scattering effect according to an embodiment of the present disclosure. As shown in FIG. 6, an image 60P may be an image (i.e., a first image) acquired by a computer device in this embodiment of the present disclosure that needs to be rendered for a medium scattering effect (e.g., an aerial perspective effect). The image 60P may be an original image on which scattering simulation rendering is not performed, or may be an image obtained after simulation rendering is already performed on a medium-containing virtual scene (for example, a sky effect) of the original image. This is not limited herein.

As shown in FIG. 6, the database 600K may store a service rendering parameter that is trained by the computer device and matches a sample environment configuration. For example, the database 600K may store a relationship table configured for indicating an association relationship of the sample environment configuration. The relationship table may include a plurality of sample environment configurations. For ease of description, in this embodiment of the present disclosure, two sample environment configurations may be used as an example and may include an environment configuration 1 (for example, the Earth) and an environment configuration 2 (for example, the Mars).

For ease of understanding, in some embodiments, referring to Table 1, Table 1 is a relationship table stored in a database according to an embodiment of the present disclosure. The relationship table may include a sample environment configuration column, an actual training column, and a service rendering distribution diagram column. Certainly, the relationship table may further include other columns. This is not limited herein. The training column herein refers to rendering parameters at the virtual light source elevation angles that are actually trained in the sample environment configuration. The following is shown in FIG. 1.

Table 1

| Sample environment configuration | Actual training | | Service rendering distribution diagram |
|---|---|---|---|
| | Virtual light source elevation angle | Rendering parameter | |
| Environment configuration 1 (for example, the earth) | $1\,\Phi_1$ (for example, -5°) | $\beta_{R1}$, $\beta_{M1}$, and $E_{sun1}$ | Rendering distribution diagram $10F_1$ |
| | $1\Phi_2$ (for example, 0°) | $\beta_{R2}$, $\beta_{M2}$, and $E_{sun2}$ | |
| | $1\Phi_3$ (for example, 10°) | $\beta_{R3}$, $\beta_{M3}$, and $E_{sun3}$ | Rendering distribution diagram $10F_2$ |
| | $1\Phi_4$ (for example, 60°) | $\beta_{R4}$, $\beta_{M4}$, and $E_{sun4}$ | Rendering distribution diagram $10F_3$ |
| Environment configuration 2 (for example, the Mars) | $2\Phi_1$ (for example, -10°) | $\beta_{R1}$, $\beta_{M1}$, and $E_{sun1}$ | Rendering distribution diagram $20F_1$ |
| | $2\Phi_2$ (for example, 0°) | $\beta_{R2}$, $\beta_{M2}$, and $E_{sun2}$ | |
| | $2\Phi_3$ (for example, 15°) | $\beta_{R3}$, $\beta_{M3}$, and $E_{sun3}$ | Rendering distribution diagram $20F_2$ |
| | $2\Phi_4$ (for example, 45°) | $\beta_{R4}$, $\beta_{M4}$, and $E_{sun4}$ | |
| | $2\Phi_5$ (for example, 90°) | $\beta_{R5}$, $\beta_{M5}$, and $E_{sun5}$ | Rendering distribution diagram $20F_3$ |

Taking the environment configuration 1 as an example, when a service object performs an attribute addition operation on a configuration control of a reference attribute, a virtual light source elevation angle $1\Phi_1$ (for example, -5°), a virtual light source elevation angle $1\Phi_2$ (for example, 0°), a virtual light source elevation angle $1\Phi_3$ (for example, 10°), and a virtual light source elevation angle $1\Phi_4$ (for example, 60°) may be added. Therefore, when responding to the attribute addition operation, the computer device can acquire these four virtual light source elevation angles, and then train rendering parameters at these four virtual light source elevation angles by combining a first rendering scheme and a second rendering scheme to obtain the rendering parameters corresponding to the virtual light source elevation angles. In some embodiments, the computer device may perform fitting within an angle interval of the virtual light source elevation angle based on the four rendering parameters to obtain a service rendering distribution diagram matching the environment configuration 1. The service rendering distribution diagram may include a rendering distribution diagram $10F_1$, a rendering distribution diagram $10F_2$, and a rendering distribution diagram $10F_3$. The rendering distribution diagram $10F_1$ is configured for representing a first rendering distribution diagram associated with the first scattering parameter, that is, the rendering distribution diagram $10F_1$ is a rendering distribution diagram associated with a scattering coefficient of Rayleigh scattering. The rendering distribution diagram $10F_2$ is configured for representing a second rendering distribution diagram associated with the second scattering parameter, that is, the rendering distribution diagram $10F_2$ is a rendering distribution diagram associated with a scattering coefficient of Mie scattering. The rendering distribution diagram $10F_3$ is configured for representing a third rendering distribution diagram associated with the luminance parameter, that is, the rendering distribution diagram $10F_3$ is configured for representing a rendering distribution diagram associated with virtual light source luminance.

When acquiring the image 60P, the computer device may determine a service environment configuration of the image 60P, and then search the database 600K based on the service environment configuration of the image 60P. If the service environment configuration of the image 60P is the sample environment configuration (for example, the environment configuration 1) included in Table 1, the computer device may directly acquire a service rendering parameter matching the environment configuration 1 according to Table 1.

If a to-be-rendered angle (for example, 10°) corresponding to the first image belongs to the virtual light source elevation angle in the actual training column corresponding to the environment configuration 1, the computer device may directly search the actual training column for a rendering parameter matching the to-be-rendered angle as the service rendering parameter. For another example, if the to-be-rendered angle (for example, 20°) does not belong to the virtual light source elevation angle in the actual training column corresponding to the environment configuration 1, when a rendering accuracy requirement is relatively low, the computer device may rapidly search three rendering distribution diagrams of the service rendering distribution diagram matching the environment configuration 1 for a rendering parameter matching the to-be-rendered angle as the service rendering parameter. For example, the computer device may search the rendering distribution diagram $10F_1$ for a scattering coefficient corresponding to the to-be-rendered angle, search the rendering distribution diagram $10F_2$ for a scattering coefficient corresponding to the to-be-rendered angle, search the rendering distribution diagram $10F_3$ for virtual light source luminance corresponding to the to-be-rendered angle, and then use the three determined parameters as the service rendering parameter matching the sample environment configuration. Certainly, since the service rendering parameter at the virtual light source elevation angle of 20 degrees is read from the service rendering distribution diagram, when the rendering accuracy requirement is excessively high, the computer device may alternatively use the first image as a new sample image and retrain the service rendering parameter at the virtual light source elevation angle of 20 degrees by combining the first rendering scheme and the second rendering scheme. Then, the computer device may update Table 1 based on the service rendering parameter at the virtual light source elevation angle of 20 degrees.

In some embodiments, if the service environment configuration of the image 60P is the environment configuration 3 (for example, the moon), there is no sample environment configuration matching the environment configuration 3 in Table 1 stored in the database 600K, which means that the computer device cannot acquire the service rendering parameter matching the environment configuration 3 according to Table 1. In this case, the computer device may use the first image as a new sample image and retrain the service rendering parameter matching the environment configuration 3 by combining the first rendering scheme and the second rendering scheme.

For example, the computer device may use the environment configuration 3 as an updated sample configuration (i.e., a new sample environment configuration) and use the first image as an updated sample image (i.e., a new sample image) in the updated sample configuration. Then, the initial rendering parameter of the updated sample configuration is trained with reference to the foregoing parameter training method for the sample environment configuration to obtain the updated rendering parameter matching the updated sample configuration. Further, an association relationship among the environment configuration 3, a rendering parameter at the virtual light source elevation angle in actual training, and the service rendering distribution diagram matching the environment configuration 3 may be established and stored in Table 1 to update Table 1.

When the service rendering parameter matching the service environment configuration of the image 60P is acquired, for example, when a rendering parameter $6U_2$ is acquired, the computer device may render an aerial perspective effect of the image 60P in real time according to a rendering parameter of a to-be-rendered angle included in the rendering parameters $6U_2$ to obtain a second image corresponding to the to-be-rendered angle, for example, obtaining a image 61P, thereby improving the rendering efficiency. Since an atmospheric scattering algorithm is mostly a rendering algorithm of a screen space, in this embodiment of the present disclosure, a particular differentiable renderer is not relied on, and even a renderer may be implemented by itself without a differentiable renderer. In this embodiment of the present disclosure, an automatic differentiation function for machine learning (for example, Pytorch) of application programs such as image identification and language processing may be adopted to render an aerial perspective effect.

It can be seen that in this embodiment of the present disclosure, an old simplification algorithm and a new physical algorithm may be combined to resolve a problem of efficiency of real-time rendering on a medium scattering effect of an image. A hard-to-adjust parameter in the second rendering scheme is deduced using intermediate data (i.e., a 3DVolume texture) of the first rendering scheme in combination with a differentiable rendering technology so that a balance of correct effect, efficient manufacturing, and rendering efficiency can be achieved in an entire scattering rendering system.

In some embodiments, referring to FIG. 7, FIG. 7 is a schematic structural diagram of a data processing apparatus according to an embodiment of the present disclosure. As shown in FIG. 7, a data processing apparatus 1 may be a computer program (including a program code) running in a computer device. For example, the data processing apparatus 1 is application software. The data processing apparatus 1 may be configured to perform corresponding operations in the data processing method provided by the embodiments of the present disclosure. As shown in FIG. 7, the data processing apparatus 1 may run on a computer device having a rendering function. The computer device may be the server 10F in the foregoing embodiment corresponding to FIG. 1, or may be any terminal device, for example, the terminal device 100a, in the terminal device cluster in the foregoing embodiment corresponding to FIG. 1. The data processing apparatus 1 may include: a rule acquisition module 10, a reference module 20, a prediction module 30, and an adjusting module 40.

The rule acquisition module 10 is configured to acquire a rendering scheme. The rendering scheme includes a first rendering scheme and a second rendering scheme. The first rendering scheme is configured for rendering a virtual scene containing a medium. The second rendering scheme is configured for rendering a medium scattering effect. The reference module 20 is configured to acquire a sample volume texture of a sample image generated by the first rendering scheme and determine, based on the sample volume texture, an actual rendering value of the sample image in a sample environment configuration and reference depth data of the sample image. The prediction module 30 is configured to determine a predicted rendering value of the sample image in the sample environment configuration based on an initial rendering parameter in the second rendering scheme and the reference depth data. The adjusting module 40 is configured to train the initial rendering parameter based on the predicted rendering value and the actual rendering value to obtain a service rendering parameter matching the sample environment configuration. The service rendering parameter is configured for rendering a medium scattering effect of a first image. A service environment configuration of the first image is the sample environment configuration.

In some embodiments, the reference module 20 is further configured to acquire reference attributes for the sample image; and acquire, based on a virtual light source elevation angle included in the reference attributes and the sample image, the sample volume texture generated by the first rendering scheme and matched with the virtual light source elevation angle.

In some embodiments, the reference module 20 is further configured to acquire a preset depth data set including N pieces of initial depth data; determine slice data of the sample volume texture at the virtual light source elevation angle based on the N pieces of initial depth data and the sample volume texture, the slice data including N sub-images; and N being a positive integer; determine, from the N sub-images, a reference image of the sample image at the virtual light source elevation angle; and determine a rendering value of the reference image as the actual rendering value of the sample image in the sample environment configuration, and determine initial depth data of the reference image as the reference depth data.

In some embodiments, the virtual light source elevation angle includes a solar elevation angle; the sample volume texture includes a first sample volume texture and a second sample volume texture; the first sample volume texture refers to a volume texture configured for simulating daytime in the sample environment configuration; the second sample volume texture refers to a volume texture configured for simulating sunset in the sample environment configuration; and the reference module 20 is further configured to display a service configuration interface for an atmospheric rendering component in a service engine, the service configuration interface including a configuration control for the solar elevation angle; respond to an attribute addition operation for the configuration control, and acquire a first elevation angle configured for exporting the first sample volume texture and a second elevation angle configured for exporting the second sample volume texture, the first elevation angle being greater than the second elevation angle; and determine the first elevation angle and the second elevation angle as the reference attributes for the sample image.

In some embodiments, the reference module 20 is further configured to traverse the N sub-images, and determine a traversed sub-image as a to-be-processed sub-image; rasterize a texture grid of the to-be-processed sub-image to obtain coordinate positions corresponding to pixel points in the to-be-processed sub-image; perform superimposition on pixel values of the pixel points based on the coordinate positions corresponding to the pixel points to obtain a total pixel value corresponding to the to-be-processed sub-image, and obtain N total pixel values until the traversing ends; and select, from the N sub-images, a sub-image having a maximum total pixel value as the reference image of the sample image at the virtual light source elevation angle.

In some embodiments, the initial rendering parameter includes a first scattering parameter, a second scattering parameter, and a luminance parameter; the first scattering parameter and the second scattering parameter correspond to different scattering manners, respectively; the luminance parameter is configured for indicating virtual light source luminance; the sample volume texture is a volume texture generated by the first rendering scheme and matched with the virtual light source elevation angle; and the prediction module 30 is further configured to acquire an initial rendering value of the sample image; determine transmittance corresponding to the sample image based on an initial scattering coefficient of the first scattering parameter, an initial scattering coefficient of the second scattering parameter, and the reference depth data; determine an internal scattering parameter of the sample image at the virtual light source elevation angle based on the initial scattering coefficient of the first scattering parameter, the initial scattering coefficient of the second scattering parameter, the luminance parameter, and the reference depth data; and determine the predicted rendering value of the sample image in the sample environment configuration based on the initial rendering value, the transmittance, and the internal scattering parameter.

In some embodiments, the virtual light source elevation angle refers to an elevation angle corresponding to directional light emitted by a virtual light source; and the prediction module 30 is further configured to determine an included angle between the directional light emitted by the virtual light source and a current line of sight; determine an updated scattering coefficient of the first scattering parameter based on the initial scattering coefficient of the first scattering parameter and the included angle; determine an updated scattering coefficient of the second scattering parameter based on the initial scattering coefficient of the second scattering parameter and the included angle; and determine the internal scattering parameter of the sample image at the virtual light source elevation angle based on the initial scattering coefficient of the first scattering parameter, the updated scattering coefficient of the first scattering parameter, the initial scattering coefficient of the second scattering parameter, the updated scattering coefficient of the second scattering parameter, the luminance parameter, and the reference depth data.

In some embodiments, the adjusting module 40 is further configured to determine a total rendering loss of the sample image based on the predicted rendering value and the actual rendering value; perform iterative training on the initial rendering parameter based on the total rendering loss to obtain a parameter training result; and determine, if the parameter training result indicates that an initial rendering parameter obtained after the iterative training satisfies a training cut-off condition, the initial rendering parameter that satisfies the training cut-off condition as the service rendering parameter matching the sample environment configuration.

In some embodiments, the sample image includes M pixel points; M is a positive integer; the M pixel points include a pixel point $X_i$; i is a positive integer less than or equal to M; and the adjusting module 40 is further configured to acquire a predicted rendering value $Y_i$ of the pixel point $X_i$ from the predicted rendering value, and acquire an actual rendering value $y_i$ of the pixel point $X_i$ from the actual rendering value; determine a rendering difference between the predicted rendering value $Y_i$ and the actual rendering value $y_i$ as a rendering loss of the pixel point $X_i$ until rendering losses corresponding to the M pixel points are obtained; and determine the total rendering loss corresponding to the sample image based on M rendering losses.

In some embodiments, the service rendering parameter is a rendering parameter corresponding to a target virtual light source elevation angle in the sample environment configuration; the target virtual light source elevation angle is any one of Z virtual light source elevation angles; Z is a positive integer greater than 1; the Z virtual light source elevation angles are elevation angles acquired when responding to a trigger operation performed by the configuration control for the reference attributes; and the apparatus further includes: a rendering parameter acquisition module configured to acquire rendering parameters corresponding to the Z virtual light source elevation angles, each rendering parameter including a first scattering parameter, a second scattering parameter, and a luminance parameter; a first fitting module configured to determine, from Z rendering parameters, first scattering coefficients associated with the first scattering parameters to obtain Z first scattering coefficients; and fit determined Z first scattering coefficients within an angle interval of the virtual light source elevation angles to obtain a first rendering distribution diagram associated with the first scattering parameters; a second fitting module configured to determine, from the Z rendering parameters, second scattering coefficients associated with the second scattering parameters to obtain Z second scattering coefficients; and fit determined Z second scattering coefficients within the angle interval of the virtual light source elevation angles to obtain a second rendering distribution diagram associated with the second scattering parameters; a third fitting module configured to determine, from the Z rendering parameters, virtual light source luminance associated with the luminance parameters to obtain Z pieces of virtual light source luminance; and fit determined Z pieces of virtual light source luminance within the angle interval of the virtual light source elevation angles to obtain a third rendering distribution diagram associated with the luminance parameters; and a distribution diagram determining module configured to determine the first rendering distribution diagram, the second rendering distribution diagram, and the third rendering distribution diagram as a service rendering distribution diagram matching the sample environment configuration.

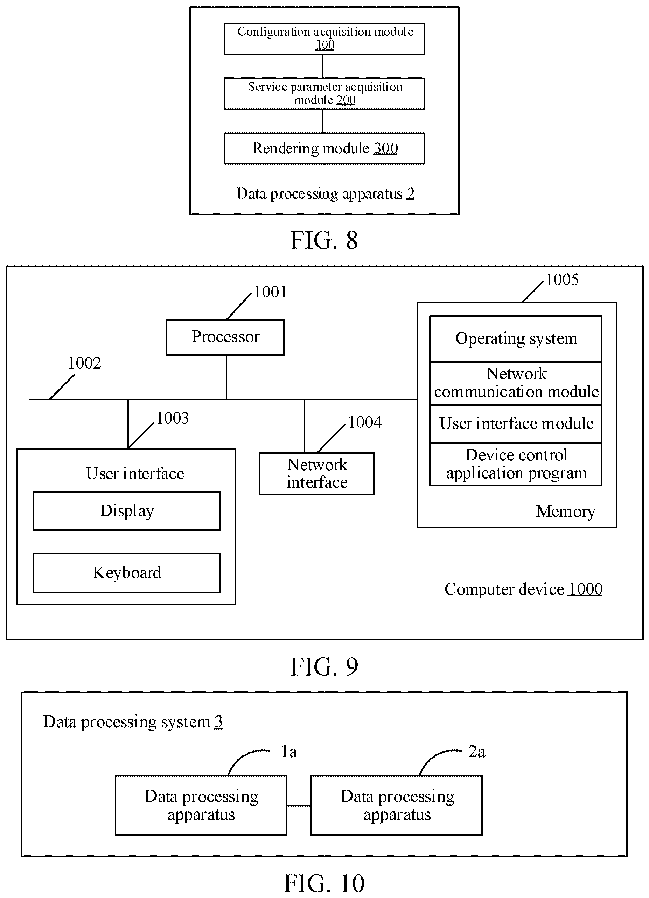

In some embodiments, referring to FIG. 8, FIG. 8 is a schematic structural diagram of another data processing apparatus according to an embodiment of the present disclosure. A data processing apparatus 2 may be a computer program (including a program code) running in a computer device. For example, the data processing apparatus 2 is application software. The data processing apparatus 2 may be configured to perform corresponding operations in the method provided by the embodiments of the present disclosure. As shown in FIG. 8, the data processing apparatus 2 may run on a computer device having a rendering function. The computer device may be the server 10F in the foregoing embodiment corresponding to FIG. 1, or may be any terminal device, for example, the terminal device 100a, in the terminal device cluster in the foregoing embodiment corresponding to FIG. 1. The data processing apparatus 2 may include: a configuration acquisition module 100, a service parameter acquisition module 200, and a rendering module 300.

The configuration acquisition module 100 is configured to acquire a service environment configuration for a first image when performing scattering simulation rendering on the first image. The service parameter acquisition module 200 is configured to acquire, if the service environment configuration is a sample environment configuration, a service rendering parameter matching the sample environment configuration. The service rendering parameter is obtained after training an initial rendering parameter in a second rendering scheme based on a predicted rendering value and an actual rendering value of a sample image in the sample environment configuration. The actual rendering value of the sample image is determined based on a sample volume texture of the sample image. The sample volume texture of the sample image is generated by a first rendering scheme. The first rendering scheme is configured for rendering a virtual scene containing a medium. The second rendering scheme is configured for rendering a medium scattering effect. The rendering module 300 is configured to render a medium scattering effect of the first image based on the service rendering parameter and the second rendering scheme to obtain a second image.

In some embodiments, the sample environment configuration is stored into a database. The service parameter acquisition module 200 is further configured to search, if the service environment configuration is the sample environment configuration, the database for a service rendering distribution diagram matching the sample environment configuration based on an association relationship of the sample environment configuration, the service rendering distribution diagram including a first rendering distribution diagram associated with first scattering parameters, a second rendering distribution diagram associated with second scattering parameters, and a third rendering distribution diagram associated with luminance parameters. determine a to-be-rendered angle corresponding to the first image; determine, in the first rendering distribution diagram, a scattering coefficient corresponding to the to-be-rendered angle as a first to-be-processed coefficient; determine, in the second rendering distribution diagram, a scattering coefficient corresponding to the to-be-rendered angle as a second to-be-processed coefficient; determine, in the third rendering distribution diagram, virtual light source luminance corresponding to the to-be-rendered angle as to-be-processed luminance; and determine the first to-be-processed coefficient, the second to-be-processed coefficient, and the to-be-processed luminance as the service rendering parameter matching the sample environment configuration.

In some embodiments, the apparatus further includes: a sample update module configured to determine, if the database does not have a sample environment configuration matching the service environment configuration, the service environment configuration as an updated sample configuration, and determine the first image as an updated sample image in the updated sample configuration; a reference update module configured to acquire a sample volume texture of the updated sample image generated by the first rendering scheme; and determine, based on the sample volume texture of the updated sample image, an actual rendering value of the updated sample image in the updated sample configuration and reference depth data of the updated sample image; a prediction update module configured to determine a predicted rendering value of the updated sample image in the updated sample configuration based on the initial rendering parameter in the second rendering scheme and the reference depth data of the updated sample image; a training update module configured to train the initial rendering parameter based on the actual rendering value of the updated sample image in the updated sample configuration and the predicted rendering value of the updated sample image in the updated sample configuration to obtain an updated rendering parameter matching the updated sample configuration; and a storage update module configured to store the updated sample configuration into the database based on the updated rendering parameter.

In some embodiments, referring to FIG. 9, FIG. 9 is a schematic diagram of a computer device according to an embodiment of the present disclosure. As shown in FIG. 9, a computer device 1000 may be a computer device having a rendering function. The computer device 1000 may include: at least one processor 1001, for example, a central processing unit (CPU), at least one network interface 1004, a memory 1005, and at least one communications bus 1002. The communications bus 1002 is configured to realize the connection and communication among the components. The network interface 1004 may include a standard wired interface and a standard wireless interface (such as a WI-FI interface). The memory 1005 may be a high-speed random access memory (RAM), or may be a non-volatile memory, for example, at least one magnetic disk storage. In some embodiments, the memory 1005 may be at least one storage apparatus that is located far away from the foregoing processor 1001. As shown in FIG. 9, as a computer storage medium, the memory 1005 may include an operating system, a network communications module, a user interface module, and a device-control application program. In some embodiments, the computer device may further include a user interface 1003 shown in FIG. 9. For example, if the computer device is the terminal device having a rendering function shown in FIG. 1, for example, the terminal device 100a, the computer device may further include the user interface 1003. The user interface 1003 may include a display, a keyboard, and the like.

In the computer device 1000 shown in FIG. 9, the network interface 1004 is mainly configured for network communication. The user interface 1003 is mainly configured to provide an input interface for a user. The processor 1001 may be configured to invoke the device-control application program stored in the memory 1005 to implement: acquiring a rendering scheme; the rendering scheme including a first rendering scheme and a second rendering scheme; the first rendering scheme being configured for rendering a virtual scene containing a medium; and the second rendering scheme being configured for rendering a medium scattering effect; acquiring a sample volume texture of a sample image generated by the first rendering scheme, and determining, based on the sample volume texture, an actual rendering value of the sample image in a sample environment configuration and reference depth data of the sample image; determining a predicted rendering value of the sample image in the sample environment configuration based on an initial rendering parameter in the second rendering scheme and the reference depth data; and training the initial rendering parameter based on the predicted rendering value and the actual rendering value to obtain a service rendering parameter matching the sample environment configuration, the service rendering parameter being configured for rendering a medium scattering effect of a first image; and a service environment configuration of the first image being the sample environment configuration.

The processor 1001 may further be configured to invoke the device-control application program stored in the memory 1005 to implement: acquiring a service environment configuration for a first image when performing scattering simulation rendering on the first image; acquiring, if the service environment configuration is a sample environment configuration, a service rendering parameter matching the sample environment configuration, the service rendering parameter being obtained after training an initial rendering parameter in a second rendering scheme based on a predicted rendering value and an actual rendering value of a sample image in the sample environment configuration; the actual rendering value of the sample image being determined based on a sample volume texture of the sample image; the sample volume texture of the sample image being generated by a first rendering scheme; the first rendering scheme being configured for rendering a virtual scene containing a medium; and the second rendering scheme being configured for rendering a medium scattering effect; and rendering a medium scattering effect of the first image based on the service rendering parameter and the second rendering scheme to obtain a second image.

The computer device 1000 described in this embodiment of the present disclosure may perform the descriptions of the data processing methods in the foregoing embodiments corresponding to FIG. 3 and FIG. 5 and may also perform the descriptions of the data processing apparatus 1 in the foregoing embodiment corresponding to FIG. 7 or the data processing apparatus 2 in the foregoing embodiment corresponding to FIG. 8. Details are not described herein again. In addition, the descriptions of beneficial effects of the same method are not described herein again.

The embodiments of the present disclosure further provide a computer-readable storage medium, having a computer program executed by the foregoing data processing apparatus 1 or the foregoing data processing apparatus 2 stored therein. The computer program includes program instructions. When executing the program instructions, a processor can perform the description of the data processing method in the foregoing embodiment corresponding to FIG. 3 or FIG. 5. Therefore, details are not described herein again. In addition, the descriptions of beneficial effects of the same method are not described herein again. Technical details that are not disclosed in the computer-readable storage medium embodiment of the present disclosure refer to the descriptions of the method embodiments of the present disclosure. As an example, the program instructions may be deployed to be executed on one computer device, on a plurality of computer devices located at one place, or on a plurality of computer devices distributed at a plurality of places and interconnected through a communication network. The plurality of computer devices distributed at the plurality of places and interconnected through the communication network may form a blockchain system.

The embodiments of the present disclosure further provide a computer-readable storage medium, having a computer program stored therein. The computer program includes program instructions, and when the program instructions are executed by a processor, the data processing methods provided in the operations of FIG. 3 and FIG. 5 may be implemented. This implementation may refer to the implementations provided by the operations of FIG. 3 and FIG. 5. Details are not described herein again.

In some embodiments, referring to FIG. 10, FIG. 10 is a schematic structural diagram of a data processing system according to an embodiment of the present disclosure. A data processing system 3 may include a data processing apparatus 1a and a data processing apparatus 2a. The data processing apparatus 1a may be the data processing apparatus 1 in the foregoing embodiment corresponding to FIG. 7. The data processing apparatus 1a may be integrated into the foregoing computer device having a rendering function. The computer device may be the server 10F in the foregoing embodiment corresponding to FIG. 1, or may be any terminal device, for example, the terminal device 100a, in the terminal device cluster in the foregoing embodiment corresponding to FIG. 1. Therefore, details are not described herein again. The data processing apparatus 2a may be the data processing apparatus 2 in the foregoing embodiment corresponding to FIG. 8. The data processing apparatus 2a may be integrated into the foregoing computer device having a rendering function. The computer device may be the server 10F in the foregoing embodiment corresponding to FIG. 1, or may be any terminal device, for example, the terminal device 100a, in the terminal device cluster in the foregoing embodiment corresponding to FIG. 1. Therefore, details are not described herein again. In addition, the descriptions of beneficial effects of the same method are not described herein again. Technical details that are not disclosed in the data processing system embodiment of the present disclosure refer to the descriptions of the method embodiments of the present disclosure.

A person skilled in the art may understand that all or some of the procedures in the methods of the foregoing embodiments may be accomplished by instructing the relevant hardware through the computer program. The foregoing program may be stored on a computer-readable storage medium and may include the procedures of the foregoing method embodiments when executed. The foregoing storage medium may be a magnetic disk, an optical disc, a read-only memory (ROM), a RAM, or the like.

What is disclosed above is merely exemplary embodiments of the present disclosure, and certainly is not intended to limit the scope of the claims of the present disclosure. Therefore, equivalent variations made in accordance with the claims of the present disclosure shall fall within the scope of the present disclosure.

**Claims**

1. A data processing method, executable by a computer device and comprising:

   acquiring a volume texture generated by rendering an image using a first rendering scheme, the first rendering scheme being configured to render the image according to a preset background configuration;
   determining, based on the volume texture, a first rendering value and depth data of the image, the first rendering value of the image being a rendering value used by the first rendering scheme in the preset background configuration;

predicting a second rendering value for rendering the image according to the preset background configuration based on a rendering parameter of a second rendering scheme and the depth data, wherein the second rendering scheme is configured to render the image to generate a medium scattering effect; and

adjusting the rendering parameter of the second rendering scheme based on the predicted second rendering value and the first rendering value to obtain an adjusted rendering parameter.

2. The method according to claim 1, wherein the acquiring a volume texture generated by rendering the image according to the first rendering scheme comprises:

acquiring reference attributes for the image; and

acquiring, based on a virtual light source elevation angle comprised in the reference attributes and the image, the volume texture which is generated by rendering the image according to the first rendering scheme and matched with the virtual light source elevation angle.

3. The method according to claim 2, wherein the determining, based on the volume texture, a first rendering value and depth data of the image comprises:

acquiring a preset depth data set comprising N pieces of initial depth data;

determining slice data of the volume texture at the virtual light source elevation angle based on the N pieces of initial depth data and the volume texture, the slice data comprising N sub-images; and N being a positive integer;

determining, from the N sub-images, a reference image of the image at the virtual light source elevation angle; and

determining a rendering value of the reference image as the first rendering value of the image in the preset background configuration, and determining initial depth data of the reference image as the depth data.

4. The method according to claim 2 or 3, wherein the virtual light source elevation angle comprises a solar elevation angle, the volume texture comprises a first volume texture and a second volume texture; the first volume texture being configured for simulating daytime in the preset background configuration; the second volume texture being configured for simulating sunset in the preset background configuration; and

the acquiring reference attributes for the image comprises:

displaying a service configuration interface for an atmospheric rendering component in a service engine, the service configuration interface comprising a configuration control for the solar elevation angle;

in response to an attribute addition operation for the configuration control, acquiring a first elevation angle configured for the first volume texture and a second elevation angle configured for the second volume texture, the first elevation angle being greater than the second elevation angle; and

determining the first elevation angle and the second elevation angle as the reference attributes for the image.

5. The method according to claim 3, wherein the determining, from the N sub-images, a reference image of the image at the virtual light source elevation angle comprises:

for each of the N sub-images,

rasterizing a texture grid of the sub-image to obtain a coordinate position of each of pixels in the sub-image;

adding pixel values of the pixels based on the coordinate positions of the pixels to obtain a total pixel value of the sub-image,

selecting, from the N sub-images, a sub-image having a maximum total pixel value as the reference image of the image at the virtual light source elevation angle.

6. The method according to any one of claims 1 to 5, wherein the rendering parameter comprises a first scattering parameter, a second scattering parameter, and a luminance parameter; the first scattering parameter and the second scattering parameter correspond to different scattering manners, respectively; the luminance parameter indicates virtual light source luminance; the volume texture is generated by the first rendering scheme and matched with the virtual light source elevation angle; and

the predicting a rendering value of the image in the preset environment configuration based on a rendering parameter of a second rendering scheme and the depth data comprises:

acquiring an initial rendering value of the image;

determining transmittance corresponding to the image based on an initial scattering coefficient of the first scattering parameter, an initial scattering coefficient of the second scattering parameter, and the depth data;

determining an internal scattering parameter of the image at the virtual light source elevation angle based on the initial scattering coefficient of the first scattering parameter, the initial scattering coefficient of the second scattering parameter, the luminance parameter, and the depth data; and

predicting the rendering value of the image in the preset background configuration based on the initial rendering value, the transmittance, and the internal scattering parameter.

7. The method according to claim 6, wherein the virtual light source elevation angle corresponds to directional light emitted by a virtual light source; and

the determining an internal scattering parameter of the image at the virtual light source elevation angle based on the initial scattering coefficient of the first scattering parameter, the initial scattering coefficient of the second scattering parameter, the luminance parameter, and the depth data comprises:

determining an included angle between the directional light emitted by the virtual light source and a current line of sight;

determining an updated scattering coefficient of the first scattering parameter based on the initial scattering coefficient of the first scattering parameter and the included angle;

determining an updated scattering coefficient of the second scattering parameter based on the initial scattering coefficient of the second scattering parameter and the included angle; and

determining the internal scattering parameter of the image at the virtual light source elevation angle based on the initial scattering coefficient of the first scattering parameter, the updated scattering coefficient of the first scattering parameter, the initial scattering coefficient of the second scattering parameter, the updated scattering coefficient of the second scattering parameter, the luminance parameter, and the depth data.

8. The method according to any one of claims 1 to 7, wherein the adjusting the rendering parameter based on the predicted rendering value and the first rendering value to obtain an adjusted rendering parameter comprises:

determining a total rendering loss of the image based on the predicted rendering value and the first rendering value;

iteratively adjusting the rendering parameter based on the total rendering loss to obtain a parameter training result; and

determining, if the parameter training result indicates that the rendering parameter obtained after the iterative adjusting satisfies a cut-off condition, the rendering parameter that satisfies the cut-off condition as the adjusted rendering parameter.

9. The method according to claim 8, wherein the image comprises M pixels; M is a positive integer; the M pixels comprise a pixel $X_i$; i is a positive integer less than or equal to M; and

the determining a total rendering loss of the image based on the predicted rendering value and the first rendering value comprises:

acquiring a predicted rendering value $Y_i$ of the pixel $X_i$ from the predicted rendering value, and acquiring a first rendering value $y_i$ of the pixel $X_i$ from the first rendering value;

determining a rendering difference between the predicted rendering value $Y_i$ and the first rendering value $y_i$ as a rendering loss of the pixel $X_i$ until rendering losses corresponding to the M pixels are obtained; and

determining the total rendering loss corresponding to the image based on M rendering losses.

10. The method according to any one of claims 1 to 9, wherein the adjusted rendering parameter corresponds to a target virtual light source elevation angle in the preset background configuration; the target virtual light source elevation angle is any one of Z virtual light source elevation angles; Z is a positive integer greater than 1; the Z virtual light source elevation angles are elevation angles acquired in response to a trigger operation performed by a configuration control for reference attributes; and

the method further comprises:

acquiring a rendering parameter corresponding to each of the Z virtual light source elevation angles, each rendering parameter comprising a first scattering parameter, a second scattering parameter, and a luminance parameter;

for each of the Z rendering parameters, determining a first scattering coefficient associated with the first scattering parameter in the rendering parameter, to obtain Z first scattering coefficients;

fitting the determined Z first scattering coefficients within an angle interval of the virtual light source elevation angles, to obtain a first rendering distribution diagram associated with the first scattering parameters;

for each of the Z rendering parameters, determining a second scattering coefficient associated with the second scattering parameter in the rendering parameter, to obtain Z second scattering coefficients;

fitting the determined Z second scattering coefficients within the angle interval of the virtual light source elevation angles to obtain a second rendering distribution diagram associated with the second scattering parameters;

for each of the Z rendering parameters, determining a virtual light source luminance associated with the luminance parameter in the rendering parameter, to obtain Z virtual light source luminance;

fitting the determined Z virtual light source luminance within the angle interval of the virtual light source elevation angles to obtain a third rendering distribution diagram associated with the luminance parameters; and

determining the first rendering distribution diagram, the second rendering distribution diagram, and the third rendering distribution diagram as a adjusted rendering distribution diagram.

11. A data processing method, performed by a computer device and comprising the following operations:

acquiring a service background configuration for a first image when performing scattering simulation rendering on the first image;

acquiring, if the service background configuration is a preset background configuration, a service rendering parameter matching the preset background configuration, the service rendering parameter being obtained after adjusting a rendering parameter of a second rendering scheme based on a predicted rendering value and a rendering value of an image in the preset background configuration; the rendering value of the image being determined based on a volume texture of the image; the volume texture of the image being generated by rendering the image according to a first rendering scheme; the first rendering scheme being configured for rendering the image according to the preset background configuration; and the second rendering scheme being configured for rendering the image to generate a medium scattering effect; and

rendering the first image in a medium scattering effect based on the service rendering parameter and the second rendering scheme to obtain a second image.

12. The method according to claim 11, wherein the preset background configuration is stored into a database; and the acquiring, if the service background configuration is a preset background configuration, a service rendering parameter matching the preset background configuration comprises:

searching, if the service background configuration is the preset background configuration, the database for a service rendering distribution diagram matching the preset background configuration based on an association relationship of the preset background configuration, the service rendering distribution diagram comprising a first rendering distribution diagram associated with first scattering parameters, a second rendering distribution diagram associated with second scattering parameters, and a third rendering distribution diagram associated with luminance parameters;

determining a to-be-rendered angle corresponding to the first image;

determining, in the first rendering distribution diagram, a scattering coefficient corresponding to the to-be-rendered angle as a first to-be-processed coefficient; determining, in the second rendering distribution diagram, a scattering coefficient corresponding to the to-be-rendered angle as a second to-be-processed coefficient; and determining, in the third rendering distribution diagram, virtual light source luminance corresponding to the to-be-rendered angle as to-be-processed luminance; and

determining the first to-be-processed coefficient, the second to-be-processed coefficient, and the to-be-processed luminance as the service rendering parameter matching the preset background configuration.

13. The method according to claim 12, further comprising:

determining, if the database does not have a preset background configuration matching the service environment configuration, the service environment configuration as an updated configuration, and determining the first image as an updated image in the updated configuration;

acquiring a volume texture generated by rendering the updated image according to the first rendering scheme;

determining, based on the volume texture of the updated image, a rendering value of the updated image in the updated configuration and depth data of the updated image;

predicting a rendering value of the updated image in the updated configuration based on the rendering parameter in the second rendering scheme and the depth data of the updated image;

adjusting the rendering parameter based on the rendering value of the updated image in the updated configuration and the predicted rendering value of the updated image in the updated configuration to obtain an updated rendering parameter matching the updated configuration; and

storing the updated configuration into the database based on the updated rendering parameter.

14. A data processing apparatus, comprising:

a reference module configured to acquire a volume texture generated by rendering an image according to a first rendering scheme, the first rendering scheme used to rendering the image according to a preset background configuration; and determine, based on the volume texture, a first rendering value and depth data of the image, the first rendering value of the image being a rendering value used by the first rendering scheme in the preset background configuration ;

a prediction module configured to predict a second rendering value for rendering the image according to the preset background configuration based on a rendering parameter of a second rendering scheme and the depth data, wherein the second rendering scheme is configured to render the image to generate a medium scattering effect; and

an adjusting module configured to adjust the rendering parameter of the second rendering scheme based on the predicted second rendering value and the first rendering value to obtain an adjusted service rendering parameter.

15. A data processing apparatus, comprising:

a configuration acquisition module configured to acquire a service background configuration for a first image when performing scattering simulation rendering on the first image;

a service parameter acquisition module configured to acquire, if the service background configuration is a preset background configuration, a service rendering parameter matching the preset background configuration, the service rendering parameter being obtained after adjusting a rendering parameter of a second rendering scheme based on a predicted rendering value and a rendering value of an image in the preset background configuration; the rendering value of the image being determined based on a volume texture of the image; the volume texture of the image being generated by a first rendering scheme; the first rendering scheme being configured for rendering the image according to the preset background configuration; and the second rendering scheme being configured for rendering the image to generate a medium scattering effect; and

a rendering module configured to render the first image in a medium scattering effect based on the service rendering parameter and the second rendering scheme to obtain a second image.

16. A computer device, a processor, a memory, and a network interface,

the processor being connected to the memory and the network interface, the network interface being configured to provide a data communication function, the memory being configured to store a computer program, and the processor being configured to invoke the computer program to cause the computer device to perform the data processing method according to any one of claims 1 to 13.

17. A computer-readable storage medium, having a computer program stored therein, the computer program being adapted to be loaded and executed by a processor, to cause a computer device having the processor to perform the data processing method according to any one of claims 1 to 13.

18. A computer program product, comprising a computer program, the computer program being stored in a computer-readable storage medium;

when a processor of a computer device reads the computer program from the computer-readable storage medium and executes the computer program, implementing the data processing method according to any one of claims 1 to 13.

10F

100a

100n

100b

100c

FIG. 1

FIG. 2

Acquire a rendering rule — S101

Acquire a sample volume texture of a sample map generated by a first rendering rule, and determine, based on the sample volume texture, an actual rendering value of the sample map in a sample environment configuration and reference depth data of the sample map — S102

Determine a predicted rendering value of the sample map in the sample environment configuration based on an initial rendering parameter in a second rendering rule and the reference depth data — S103

Train the initial rendering parameter based on the predicted rendering value and the actual rendering value to obtain a service rendering parameter matching the sample environment configuration — S104

FIG. 3

Acquire a sample volume texture generated by a first rendering rule and matched with a target virtual light source elevation angle through a service engine — S41

Import the sample volume texture into a scripting language to obtain sliced data of the sample volume texture at the target virtual light source elevation angle — S42

Rasterize texture grids of N sample sub-images in the sliced data by using a rasterization tool — S43

Determine, from the N sample sub-images, a reference image of a sample map at the target virtual light source elevation angle according to total pixel values corresponding to the N sample sub-images, respectively — S44

Acquire a predicted rendering value of the sample map through a second rendering rule, and determine a rendering loss based on the predicted rendering value and an actual rendering value of the reference image — S45

Determine whether a total rendering loss is less than or equal to a loss threshold — S46    No

Yes

Determine a current rendering parameter as a service rendering parameter matching the target virtual light source elevation angle in a sample environment configuration — S47

Populate the service rendering parameter obtained through training into a service configuration interface — S48

FIG. 4

Parameter training process

S201

Acquire a rendering rule

S202

Acquire a sample volume texture of a sample map generated by a first rendering rule, and determine, based on the sample volume texture, an actual rendering value of the sample map in a sample environment configuration and reference depth data of the sample map

S203

Determine a predicted rendering value of the sample map in the sample environment configuration based on an initial rendering parameter in a second rendering rule and the reference depth data

S204

Train the initial rendering parameter based on the predicted rendering value and the actual rendering value to obtain a service rendering parameter matching the sample environment configuration

Parameter application process

S205

Acquire a service environment configuration for a first map when performing scattering simulation rendering on the first map

S206

Acquire, if the service environment configuration is the sample environment configuration, the service rendering parameter matching the sample environment configuration

S207

Render a medium scattering effect of the first map based on the service rendering parameter and the second rendering rule to obtain a second map

FIG. 5

Database
600K

Search based on a service
environment configuration
→

Rendering
parameter $6U_2$

FIG. 6

Rule acquisition module 10

Sample reference module 20

Sample prediction module 30

Training module 40

Data processing apparatus 1

FIG. 7

Configuration acquisition module
100

Service parameter acquisition
module 200

Rendering module 300

Data processing apparatus 2

## FIG. 8

1001

Processor

1002

1005

Operating system

Network
communication module

User interface module

Device control
application program

Memory

1003

1004

User interface

Display

Keyboard

Network
interface

Computer device 1000

## FIG. 9

Data processing system 3

1a

2a

Data processing
apparatus

Data processing
apparatus

## FIG. 10

## INTERNATIONAL SEARCH REPORT

| International application No. |
| --- |
| **PCT/CN2024/075504** |

### A. CLASSIFICATION OF SUBJECT MATTER

G06T 15/50(2011.01)i

According to International Patent Classification (IPC) or to both national classification and IPC

### B. FIELDS SEARCHED

Minimum documentation searched (classification system followed by classification symbols)

IPC: G06T, G06F

Documentation searched other than minimum documentation to the extent that such documents are included in the fields searched

Electronic data base consulted during the international search (name of data base and, where practicable, search terms used)

CNABS, CNTXT, ENTXT, VEN, CNKI, IEEE: 渲染, 规则, 策略, 场景, 环境, 散射, 参数, 纹理, render+, rules, policy, scene, environment, scatter, parameter?, texture

### C. DOCUMENTS CONSIDERED TO BE RELEVANT

| Category* | Citation of document, with indication, where appropriate, of the relevant passages | Relevant to claim No. |
| --- | --- | --- |
| PX | CN 116030179 A (TENCENT TECHNOLOGY (SHENZHEN) CO., LTD.) 28 April 2023 (2023-04-28) claims 1-16, and description, paragraph 21 | 1-18 |
| A | CN 115089963 A (ZHUHAI KINGSOFT DIGITAL NETWORK TECHNOLOGY CO., LTD.) 23 September 2022 (2022-09-23) description, paragraphs 36-66 | 1-18 |
| A | CN 112691373 A (TENCENT TECHNOLOGY (SHENZHEN) CO., LTD.) 23 April 2021 (2021-04-23) entire document | 1-18 |
| A | CN 115526976 A (NETEASE (HANGZHOU) NETWORK CO., LTD.) 27 December 2022 (2022-12-27) entire document | 1-18 |
| A | CN 115775294 A (HANGZHOU HIKVISION DIGITAL TECHNOLOGY CO., LTD.) 10 March 2023 (2023-03-10) entire document | 1-18 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **22 April 2024** | **08 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/075504** |

### C.    DOCUMENTS CONSIDERED TO BE RELEVANT

| Category* | Citation of document, with indication, where appropriate, of the relevant passages | Relevant to claim No. |
| --- | --- | --- |
| A | US 2022309741 A1 (SONY INTERACTIVE ENTERTAINMENT INC.) 29 September 2022 (2022-09-29)<br>entire document | 1-18 |

Form PCT/ISA/210 (second sheet) (July 2022)

**INTERNATIONAL SEARCH REPORT**
Information on patent family members

International application No.

**PCT/CN2024/075504**

| Patent document cited in search report | | | Publication date (day/month/year) | Patent family member(s) | | | Publication date (day/month/year) |
|---|---|---|---|---|---|---|---|
| CN | 116030179 | A | 28 April 2023 | None | | | |
| CN | 115089963 | A | 23 September 2022 | None | | | |
| CN | 112691373 | A | 23 April 2021 | HK | 40042019 | A0 | 27 August 2021 |
| CN | 115526976 | A | 27 December 2022 | None | | | |
| CN | 115775294 | A | 10 March 2023 | None | | | |
| US | 2022309741 | A1 | 29 September 2022 | GB | 2605158 | A | 28 September 2022 |
| | | | | EP | 4068217 | A1 | 05 October 2022 |

Form PCT/ISA/210 (patent family annex) (July 2022)

**REFERENCES CITED IN THE DESCRIPTION**

**Patent documents cited in the description**

- CN 2023103210068